# EUROPEAN PATENT SPECIFICATION

(11) **EP 3 538 825 B1**
(45) Date of publication and mention of the grant of the patent: **07.10.2020**
(21) Application number: 18711776.7
(22) Date of filing: 02.03.2018
(51) Int. Cl.: F25B 21/02, F25D 31/00

(54) **MODULARIZED BEVERAGE HOLDER FOR ACTIVELY COOLING BEVERAGES AND METHOD FOR PERFORMING THE SAME**
MODULARISIERTE GETRÄNKEHALTERUNG ZUR AKTIVEN KÜHLUNG VON GETRÄNKEN UND VERFAHREN ZUR DURCHFÜHRUNG DAVON
PORTE-BOISSON MODULAIRE POUR REFROIDIR ACTIVEMENT DES BOISSONS ET SON PROCÉDÉ DE RÉALISATION

(30) Priority: 03.03.2017 US 201762466861 P
(43) Date of publication of application: 18.09.2019
(60) Divisional application: 20153752.9
(73) Proprietor: Legacy US, LLC, Menlo Park, California 94025 (US)
(72) Inventor: DALTON, Jeffrey Travis, Menlo Park, California 94025 (US); REEVES, Kim Marie, Menlo Park, California 94025 (US); HARRIS, Brian Steven, Belmont, California 94002 (US)
(74) Representative: Birdi, Sandeep Singh
(86) International application number: PCT/US2018/020760
(87) International publication number: WO 2018/161030

(56) References cited:
- EP-A1- 1 188 995
- EP-A2- 1 069 388
- DE-A1- 19 753 036
- DE-U1- 29 614 483
- JP-A- H07 218 083
- JP-A- 2004 162 984
- JP-A- 2004 294 016
- US-A- 3 839 876
- US-A1- 2006 260 324
- US-A1- 2010 258 268

## Description

### CROSS-REFERENCE

This application claims the benefit of and priority to U.S. Provisional Application No. 62/466,861, titled "BEER CUP/CAN COOLING HOLDER AND METHOD", filed 3 March 2017 (Atty Docket No. LGLA 1001-1).

### FIELD OF INVENTION

The present invention relates to actively cooling and/or heating a beverage, and in particular relates to a modularized beverage holder that is capable of actively cooling and heating a beverage contained in a beverage container.

### BACKGROUND

When a spectator at a sporting event or a concert or when a customer at a restaurant or a bar purchases a beverage they prefer the beverage to remain at its original cold or hot temperature. Stadiums often provide drink holders near each seat, but the drink holders do not help to keep the beverage at its original cold or hot temperature. Beverages that are meant to be cold typically taste better when they are cold and beverages that are meant to be hot typically taste better when they are hot. In the same vein, beverages that reach ambient temperature do not taste very good and do not get consumed as quickly as cold and/or hot beverages. For example, beer and soda taste better when they are cold and are consumed at a faster rate when they are at their intended temperature. Beverages that remain cold or hot result in a more satisfied consumer and result in more beverages being purchased from the vendor. Consider a spectator at an outdoor baseball stadium who purchases a beer in an aluminum container or a plastic cup. The outdoor ambient temperature and relative humidity will cause the temperature of the beer to quickly rise and the aluminum container or plastic cup provide poor insulation to keep the beer cold.

For example, beer sold at a specific stadium, arena, concert hall, or outdoor/pool or themed sports bar is typically done so in beverage containers (e.g., cups, cans, bottles, or glassware) that are pre-determined by the venue. For example, a baseball park may offer two different sizes of beer cups, large, which can hold 24 ounces and small, which can hold 16 ounces. The baseball park may also offer a 16-ounce aluminum cane. These packages may change from season to season but remain the same from game to game.

Beverages such as soda and beer that are sold at a stadium, arena, or concert hall are sold at a premium price, which is often a multiple of the price that the same beverage would cost if bought from a store, restaurant or bar. The venue is able to do this, command a high price for a short time, because the consumer is limited with one entity from which to purchase for the duration of the event. In the case of baseball, most areas of the stadium stop selling beverages after the 7^{th} inning. Well-managed venues recognize that a great deal of money can be made selling beverages at a premium price for a short time period and, therefore, do their best to cool the beverages they sell in order to maximize revenue. While "cold" and "warm" are relative concepts, when applied to beer, in most parts of the world, cold beer sells far better than warm beer. This also applies to soda and other beverages.

Draught beer is typically dispensed from a keg at 36° F to 38° F (2.22°C to 3.33°C, the temperature in °C being calculated with the formula T_{(°C)} = (T_{(°F)} - 32) / (9/5)) in the United States. Due to the laws of physics as they apply to dispensing draught beer from a keg, it is generally accepted that beer will not pour properly at 45° F as it will pour a continuous stream of foam. Similar principals apply to soda, just at differing temperatures. Furthermore, beer will pour only slightly better at 44° F (more foam with a little beer), and slightly better than that at 43° F. Aluminum pint bottles are often pulled from an ice bin or a refrigeration unit when sold. Sophisticated brewers are well aware that temperature plays a key role in marketing their product. "Cold beer! Get your cold beer here!" is often heard in a sports stadium.

Pricing also plays a role in marketing beer at a venue. The per-ounce price is greater for the small draught beer than for the larger beer. Generally, the larger the beer cup, the lower the price per ounce. A great many consumers make a buying decision based, in part, on how much beer they can consume before the beer becomes undrinkable (too warm to enjoy).

Sophisticated brewers and retailers have studied this phenomenon. While the temperature at which point a beer becomes undrinkable may vary (brewers' opinion vs consumers' preference), it is generally agreed that a consumer is less likely to purchase another beer if the beer they just finished is approaching, at, or beyond that undrinkable temperature point. That unpleasant warm beer taste at the end of a beer (the last sip) is often a spoiler for the decision to purchase another beer. However, if that last sip is pleasant (cold), the consumer often opts to purchase an additional beer.

Conventionally, these problems have been addressed using portable insulating sleeves for keeping beverages cold and/or warm. However, it is inconvenient for a consumer to always have an insulating sleeve on hand. Further, the insulating sleeves do a mediocre job, at best, of preventing temperature change in a beverage, because the sleeves are merely provide passive insulation. In addition, the sleeves usually only fit one size of a beverage container and do not fit well on cups.

Therefore a need arises for a beverage holder that is capable of actively cooling and/or heating beverages in indoor and outdoor environments.

Conventionally, drink cup holders are found in cars, boats, recreational vehicles and outdoor venues. Their purpose is to provide a defined space to place a beverage into - a beverage holster if you will. Some drink insulated coolers even go so far as to mold cup holder placements into the cooler top for the same purpose. For example, stadiums, arenas, and other venues provide drink cup holders specific to each seat.

Drink cup holders currently exist in a wide variety of shapes, sizes, and functionality. They are almost exclusively designed to allow as many options of beverage container (cup, can, mug, or glass sizes) as practicable in order to make them as utilitarian as possible. The greater the variety of sizes and shape drink containers a drink cup holder can accommodate the better, since beverage manufacturers rely in part on packaging and package differentiation to increase sales of their product and are always looking to innovate their package size and shape. Consumer tastes also change. A drink cup holder that can't accommodate a popular new drink container becomes less desirable, and ultimately an obsolete feature.

No such drink holder exists that is capable of adapting to different sizes and shapes of beverage containers, while also providing the ability to actively cool and/or heat the beverage within the beverage container. The technology disclosed provides a modular beverage holder that is capable of actively cooling and/or heating a beverage contained within various sizes of beverage containers by, for example, changing the shape of internal cooling/heating plates to form fit different sizes and/or profiles of beverage containers.

The documents JP 2003 072897 A, FR 1 330 745 A and WO 2007/089789 A2 disclose beverage cooling apparatuses.

### SUMMARY

The technology disclosed relates to a modular actively cooled and/or heated beverage container holder that can be configured to provide maximal cooling and/or heating. Some implementations find particular utility in stadium events in which beverages are served in plastic cups and/or aluminum cans. One representative modular system includes: a sleeve shaped beverage container holder operatively affixed with one or more modular cooling engines. A representative cooling engine can include a thermoelectric chip, a connection to a power supply with waterproof connectors, and a modular frame for housing the container holder and engine to maximize a flow of air or other coolant in order to remove heat. Portions of the modular frame also serve as a functional drink rail, table-top, or counter-top.

The a modular actively cooled beverage container holder can be configured specifically to cool beverages in a particular example implementation and/or freeze beverages given enough time. The purpose is to make sure the last taste of the beverage from the beverage container is at least as cold (or hot) as the temperature of the beverage when it was first purchased or served.

According to the invention, a modularized beverage holder for actively cooling beverages according to claim 1 is provided.

According to the invention, a method for actively cooling beverages is provided, according to claim 15.

In a further not claimed example, a beverage container holder is provided. The beverage container can include a frame having a top and a bottom, the frame defining an open interior, the top having a top opening, a Peltier engine, coupleable to a source of electricity, the Peltier engine mounted to the frame, the Peltier engine comprising: a Peltier chip having a hot side and a cold side; a chill plate affixed to the cold side and positioned within the open interior; a heat-dissipating assembly at the hot side; and the chill plate having a curved inner surface shaped to accommodate at least one beverage container. The beverage container can also include a mounting assembly movably mounting the Peltier engine to the frame for positioning the curved inner surface of the chill plate at different orientations, including a pre-use orientation without the beverage container within the open interior.

Further, in a not claimed example a method for maintaining beverage within a beverage container at a cooled temperature of 22° F to 44° F while the beverage is consumed is provided. The method can include placing the beverage container through a top opening of a beverage container cooler and into an open interior of the beverage container cooler, the beverage container cooler having a Peltier engine, coupleable to a source of electricity, the Peltier engine comprising a Peltier chip having a hot side and a cold side, a chill plate affixed to the cold side and positioned within the open interior, a heat-dissipating assembly at the hot side, the chill plate having a curved inner surface shaped to accommodate the beverage container, carrying out the placing of the beverage container with at least a portion of the curved inner surface being at a temperature of less than 34° F, and preferably less than 32° F, and more preferably less than 12° F, leaving the beverage container within the beverage container cooler until at least a portion of the beverage within the beverage container reaches a cooled temperature of 22° F to 44° F, withdrawing the beverage container from the beverage container cooler, removing some of the cooled beverage from the beverage container, replacing the beverage container through the top opening and into the open interior, and repeating the leaving, withdrawing and removing steps.

In other embodiments, drink rail, table-top, and counter-top component-driven systems created specifically for stadiums, arenas, concert halls, outdoor/pool, and sports-themed bars/restaurants designed to function as the housing for a modular actively cooled beverage container holder are provided. Featured in these systems can include outdoor-rated USB chargers with a force-closure mechanism, and a plug and play waterproof electrical system (IP67) which can be installed from a junction box without an electrician.

An important purpose of the technology described herein is to actively cool and/or heat beverages in a stadium, arena, concert hall, outdoor/pool or sports themed bar/restaurant by placing the beverages into the modular actively cooled/heated beverage container holder between sips. Cooling can be defined as keeping the beverage at or below serving temperature throughout the drinking experience for a period of time that the experience lasts. Heating can be defined as keeping the beverage at or above serving temperature throughout the drinking experience. Accordingly, over time, specific implementations can ensure the last taste of a beverage will be as cold, or colder, than the temperature at which it was originally dispensed (or sold) regardless of ambient temperature. In favorable ambient temperatures (70° F to 80° F) it is possible for certain implementations of the disclosed technology to cool beverages to well below serving temperature - to super-cool - and provide a new, refreshing drinking experience.

Particular aspects of the technology disclosed are described in the claims, specification and drawings.

### BRIEF DESCRIPTION OF THE DRAWINGS

**FIG. 1** illustrates an exploded assembly drawing, side view of a modularized beverage container holder having a single cooling engine for actively cooling beverages inserted via an opening in the top.
**FIG. 2** illustrates an exploded assembly drawing, side view of a modularized beverage container holder having a single cooling engine for actively cooling beverages inserted via an opening in the side.
**FIG. 3** illustrates an orthogonal top view of a modularized beverage container holder having a single cooling engine for actively cooling beverages inserted via an opening in the top.
**FIG. 4** illustrates an orthogonal top view of a modularized beverage container holder having a single cooling engine for actively cooling beverages inserted via an opening in the side.
**FIG. 5** illustrates an orthogonal bottom view of a modularized beverage container holder having a single cooling engine for actively cooling beverages inserted via an opening in the top.
**FIG. 6** illustrates an orthogonal bottom view of a modularized beverage container holder having a single cooling engine for actively cooling beverages inserted via an opening in the side.
**FIG. 7** illustrates an orthogonal top view of a modularized beverage container holder having a dual cooling engine configuration for actively cooling beverages inserted via an opening in the top.
**FIG. 8** illustrates an orthogonal bottom view of a modularized beverage container holder having a dual cooling engine configuration for actively cooling beverages inserted via an opening in the top.
**FIG. 9** illustrates a side view of a modularized beverage container holder having a dual cooling engine configuration for actively cooling beverages inserted via an opening in the top.
**FIG. 10** illustrates an orthogonal bottom view of a modularized beverage container holder having a dual cooling engine configuration for actively cooling beverages inserted via an opening in the top with fans directed to the same side.
**FIG. 11** illustrates an orthogonal bottom view of a modularized beverage container holder having a dual cooling engine configuration for actively cooling beverages inserted via an opening in the top with fans directed to opposite sides.
**FIG. 12** illustrates an exploded assembly drawing, orthogonal top view of a modularized beverage container holder having a dual cooling engine configuration for actively cooling beverages inserted via an opening in the top with fans directed to the same side.
**FIG. 13** illustrates a detail view of the orthogonal bottom view of **FIG. 10** in which the beverage container receiver has been cut away to reveal internal components.
**FIG. 14** illustrates a detail view of the orthogonal top and bottom views of **FIG. 11** in which the beverage container receiver has been cut away to reveal internal components.
**FIG. 15** illustrates an orthogonal top view of a modularized beverage container holder having a triple cooling engine configuration for actively cooling beverages inserted via an opening in the top.
**FIG. 16** illustrates an orthogonal bottom view of a modularized beverage container holder having a triple cooling engine configuration for actively cooling beverages inserted via an opening in the top.
**FIG. 17** illustrates an exploded assembly drawing, orthogonal top view of a modularized beverage container holder having a triple cooling engine configuration for actively cooling beverages inserted via an opening in the top.
**FIG. 18** illustrates an exploded assembly drawing, orthogonal side view A of a modularized beverage container holder having a triple cooling engine configuration for actively cooling beverages inserted via an opening in the top.
**FIG. 19** illustrates an exploded assembly drawing, orthogonal side view B of a modularized beverage container holder having a triple cooling engine configuration for actively cooling beverages inserted via an opening in the top.
**FIG. 20** illustrates a detail view of the orthogonal side view B of **FIG. 19** in which the beverage container receiver and frame have been cut away to reveal internal components.
**FIG. 21** illustrates an exploded assembly drawing, orthogonal side view of a drainage assembly with centering bumps positioned at the bottom of a modularized beverage container holder.
**FIG. 22** illustrates an orthogonal top view of a drainage assembly with centering bumps positioned at the bottom of a modularized beverage container holder.
**FIG. 23** illustrates a side view of a drainage assembly with centering bumps positioned at the bottom of a modularized beverage container holder.
**FIG. 24** illustrates a cross-sectional side view of a drainage assembly with centering bumps inserted into the beverage container receiver.
**FIG. 25** illustrates a cross-sectional side view of a drainage assembly with centering bumps inserted into the beverage container receiver.
**FIG. 26A, 26B,** and **26C** illustrate side view A, side view B and side view C of a thermal conductor.
**FIG. 27** illustrates a direct contact between a cup and a thermal conductor.
**FIG. 28** illustrates an air gap formed between a standard diameter aluminum beverage can and a thermal conductor.
**FIG. 29** illustrates an orthogonal side view of an alternate embodiment of a modularized beverage container holder having a triple cooling engine configuration for actively cooling beverages inserted via an opening in the top.
**FIG. 30** illustrates an orthogonal top view of the alternate embodiment of a modularized beverage container holder having a triple cooling engine configuration for actively cooling beverages inserted via an opening in the top.
**FIG. 31** illustrates an orthogonal bottom view of the alternate embodiment of a modularized beverage container holder having a triple cooling engine configuration for actively cooling beverages inserted via an opening in the top.
**FIG. 32** illustrates an exploded assembly view of a drink rail installation.
**FIG. 33** illustrates an exploded assembly detail view of a drink rail installation.
**FIG. 34** illustrates bottom, rear, right side isometric view and a bottom, front, right side isometric view of an assembled drink rail.
**FIG. 35** illustrates a front elevation detail view of a drink rail installation with conduit channels.
**FIG. 36** illustrates a top view of a beverage container receiver.
**FIG. 37** illustrates a side view of a beverage container receiver for use with a dual engine configuration for actively cooling beverages inserted into the top.
**FIG. 38** illustrates an orthogonal top view of a beverage container receiver for use with a dual engine configuration for actively cooling beverages inserted into the top.

### DETAILED DESCRIPTION

The following detailed description is made with reference to the figures. Example implementations are described to illustrate the technology disclosed, not to limit its scope, which is defined by the claims. Those of ordinary skill in the art will recognize a variety of equivalent variations on the description that follows.

### Introduction and Some Example Implementations

Implementations of a modular actively cooled and/or heated beverage container holder, also referred to as the beer cup/can cooling holder or the beer cup cooling holder, exist in a variety of modular configurations, of which representative configurations are used herein to illustrate the technology to cool, for example, a beverage such as beer which has typically been served to the consumer at 36° F to 38° F and may have warmed to, for example, 45° F before being placed in the modular actively cooled beverage container holder.

Some implementations provide for cooling beer to temperatures previously thought to cause beer to freeze and / or alcohol to separate out from the beer. Light Beers are commonly thought to freeze at about 28° F, for example. One implementation of the modular actively cooled beverage holder can cool a light beer, such as Coors Light™, to about 24° F without the beer freezing and without the alcohol separating out. Light beers are beers having the reduced alcoholic content and/or fewer calories than regular beer. For the purposes of this application, light beers have an alcoholic content of about 4.2% and/or calories of about 102 calories per 12-ounce serving. In cooling to these super cold temperatures, defined as 32° F or lower, preferably 22° F to 32° F, more preferably 22° F to 28° F, and most preferably 22° F to 24° F, a new flavor experience is created. Note that cooling within the cup of beer occurs over a range of temperatures, not one representative temperature. For example, a reading of 24° F at the bottom of the beverage container closest to a modular engine (e.g., cooling/heating engine) may have additional reading of 24° F at bottom center, 28° F at the top of the beverage container and 31° F in the middle of the beverage container. In one test when a light lager beer was cooled to 22° F to 24° F (essentially univocally throughout the beverage container), professional tasters reported that it enhanced the fruitier notes of the beer's flavor profile. Slight agitation may cause an immediate phase change from liquid to liquid and ice and a temperature spike to approximately 32° F.

Some implementations can provide for freezing beer in a plastic cup (over a length of time) even when an ambient temperature is as high as 90° F. Embodiments are implemented to cool beverages in an environment in which the ambient temperature is not controllable, for example outdoors in direct sun.

### Single Engine Modularized Beverage Holder

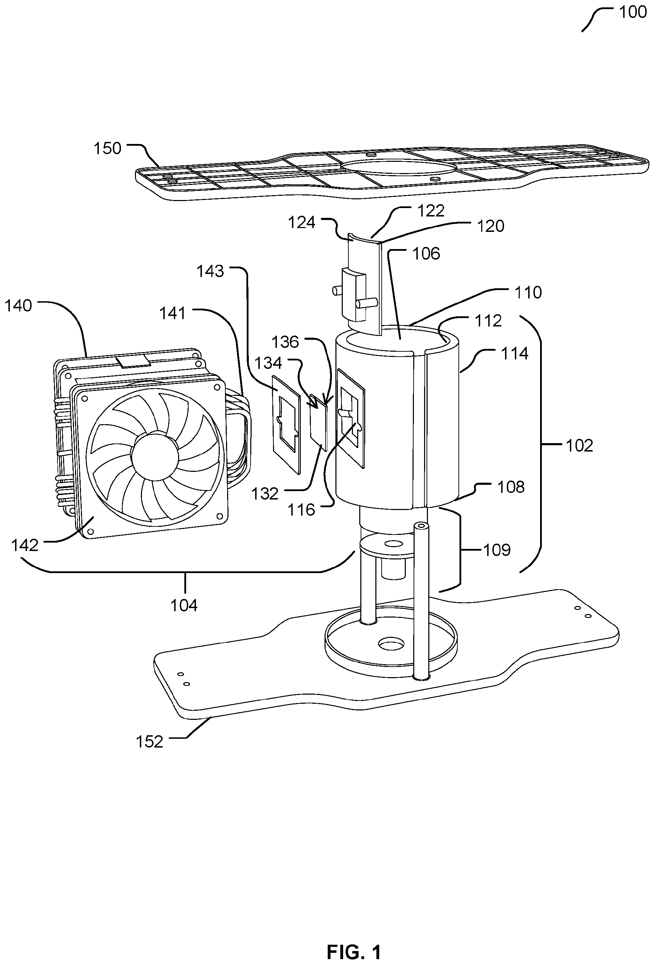

**FIG. 1** illustrates an exploded assembly drawing, side view of a modularized beverage container holder **100** having a single cooling engine for actively cooling beverages inserted via an opening in the top.

Referring to **FIG. 1****,** the modularized beverage container holder **100,** includes subassemblies of a sleeve shaped beverage container receiver **102,** optimally having a unibody construction of an insulating material, and one or more modular engines **104** for actively cooling (or heating) beverages inserted into the sleeve shaped beverage container receiver **102** to which the first modular engine is mounted. As discussed in more detail below with reference to subsequent figures, the modularized beverage container holder **100** is capable of having multiple modular engines attached thereto (e.g., 2, 3, 4....16, or even more engines, depending upon the diameter of the sleeve shaped beverage container receiver **102**)**.** A modularized beverage container holder **100** adapted to have 16 or more engines would be more appropriate for cooling and/or heating large containers such as kegs.

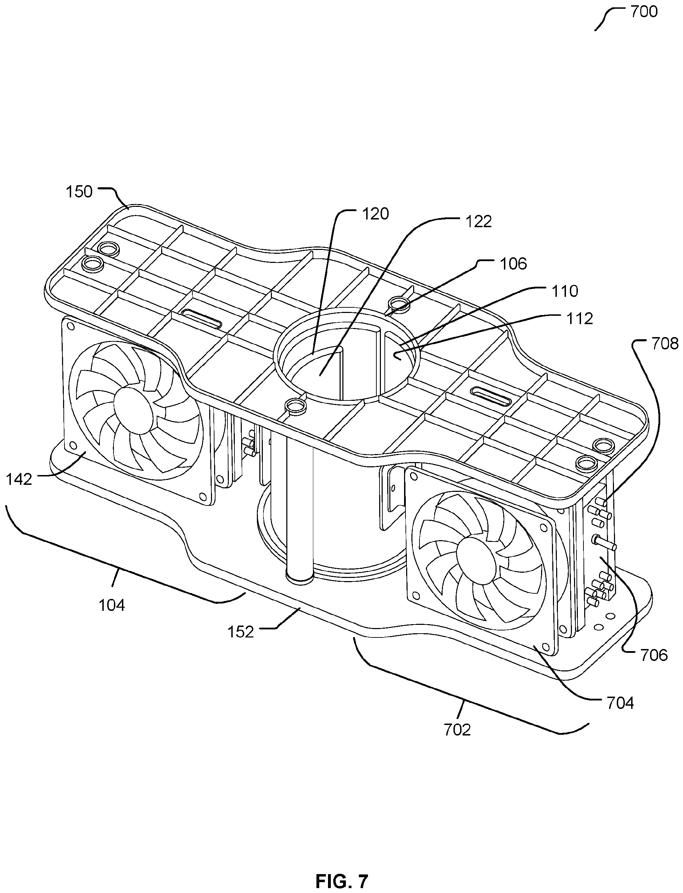

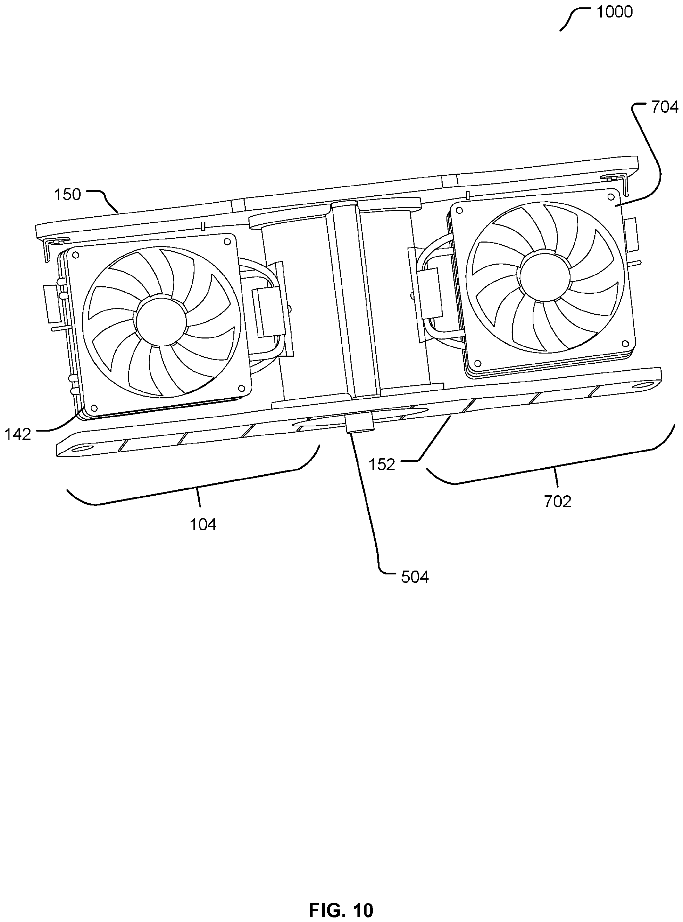

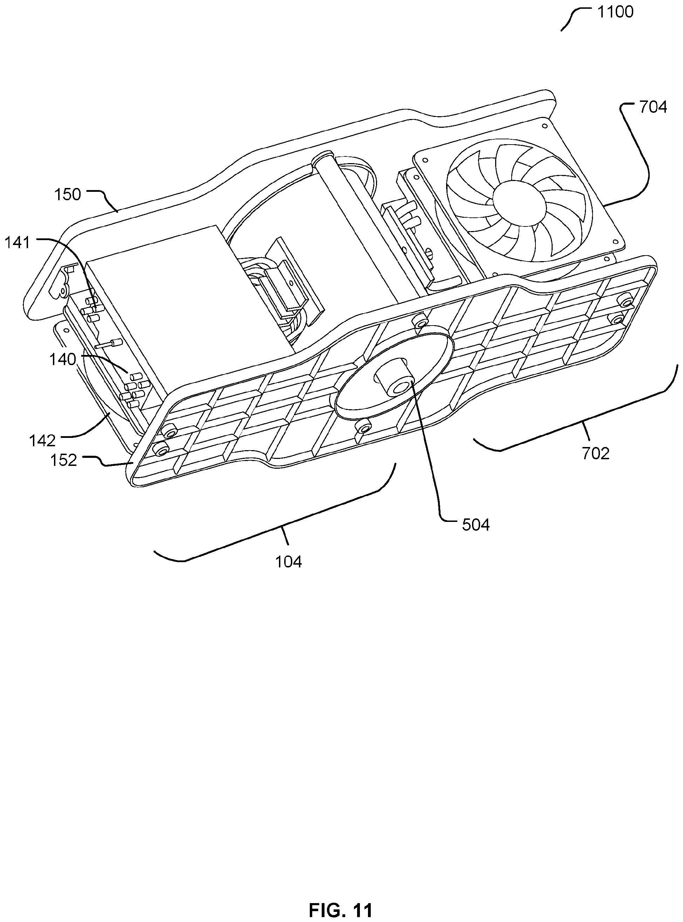

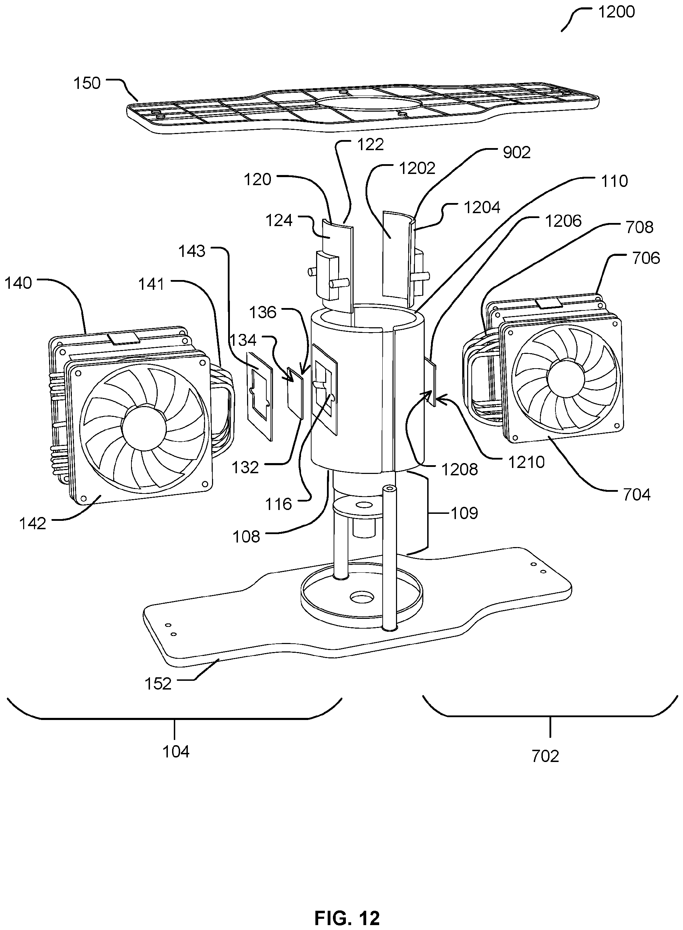

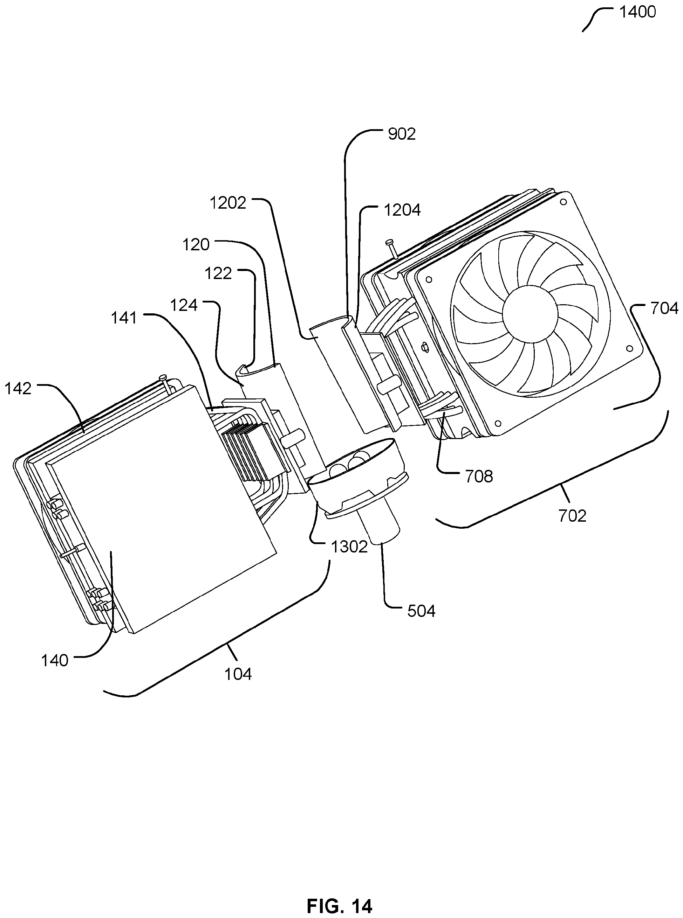

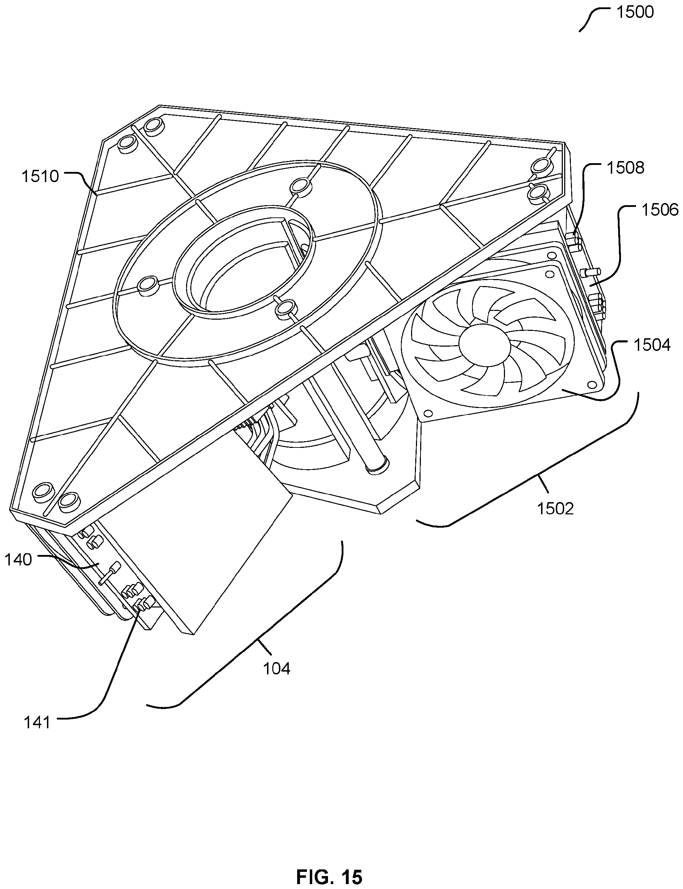

For example, modular engines, such as (first) modular engine **104** may also have multiple deployments in one, two, three or more engine configurations depending upon venue. Indoor venues may only need a two engine configuration to super-cool in a timely manner as ambient temperature is controlled and therefore unlikely to exceed 75° F. For example, **FIGS. 7 - 14** illustrate various views of a modularized beverage container holder having a dual cooling engine configuration for actively cooling beverages. In the dual engine configurations employing fans to dissipate heat removed from the beverage containers, with fans directed to the same side as shown by **FIGS. 10** and **12** or directed to opposite sides as shown by **FIGS. 11** and **14****.** Further, **FIGS. 15** - **20**, illustrate various views of a modularized beverage container holder having a triple cooling engine configuration for actively cooling beverages.

In embodiments described in further detail below, the modular engines are designed to function independently of one another in order to be replaceable when one or more engines fail. Electrical connections are made to be engine-specific with a quick-connect waterproof fitting. Each engine is independently connected to a power supply via a waterproof male connector. Independent engine design allows for an array of power supply options. For example, if each engine requires 8.15 Amps of 12 VDC power to operate, one 12 VDC power supply (outputting 40 Amps) is sufficient to power four engines (or two 2-engine super-cooling beer cup holders). Additionally, two 12 VDC power supplies (outputting 20 Amps each) would also be sufficient to power four engines. Power supply flexibility allows for strategic heat dissipation as well as possible cost savings as two 12 VDC 20 Amp power supplies are less expensive than one 12 VDC 40 Amp Power Supply. Finally, four 12 VDC 10 Amp power supplies, one for each engine, may become an even less expensive power alternative.

As shown in **FIG. 1**, the sleeve shaped beverage container receiver **102** has an interior opening **106** adapted to receive beverage containers of varying sizes and materials, a bottom portion **108** adapted to receive and provide support for beverage containers inserted into the interior opening of the sleeve shaped beverage container receiver **102,** and a sidewall **110** or "sleeve" including an interior surface **112,** an exterior surface **114** and one or more via holes **116.** The sidewall **110** can be implemented using an extreme insulating material selected specifically to keep cooling and/or heating in. For example, the sidewall **110** can be a "soft" durometer material allows for modular engine movement since it gives and stretches as stress is applied to it, yet it has the memory to move back into place when stress is removed. In a present implementation, polyurethane, such as polyurethane foam (PU foam) is used to implement the sidewall **110.** Softer materials provide for more flexibility while harder materials tend to restrict movement. A person of skill in the art would recognize other materials or composites that would be best suited for particular implementations of the modularized beverage container holder **100.** An optional centering and drainage portion **109** can be inserted into the bottom portion **108** of the sleeve shaped beverage container receiver **102.**

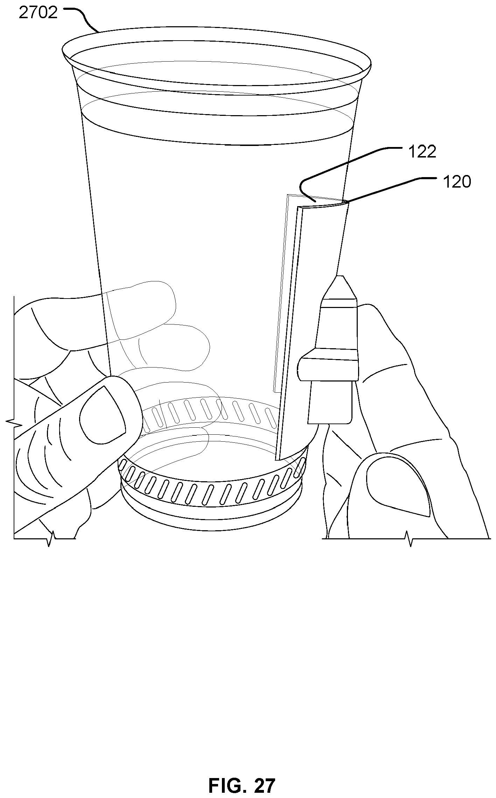

The modular engine **104** can actively cool and/or heat beverages in containers inserted into the sleeve shaped beverage container receiver **102.** As illustrated in **FIG. 1****,** an example modular engine includes a thermal conductor member **120** having an inner beverage container facing surface **122** and an outer facing surface **124.** The thermal conductor member **120** can be disposed on the interior surface **112** of the sidewall **110** of the sleeve shaped beverage container receiver **102.** In a present embodiment, the thermal conductor member **120** is implemented using a copper cooling/chill plate (see also, **FIGS. 27A, 27B** and **27C)** that are affixed to the interior surface **112** and exposed to the atmosphere. In one implementation, portions of the thermal conductor member **120** (e.g., the chill plate) has a thickness of about 2 mm, and the chip mounting area has a thickness of about 8 mm, with the overall size shown in **FIGS. 27A, 27B** and **27C****.** When operating, frost and ultimately ice may form on the inner beverage container facing surface **122.** As shown in **FIG. 1****,** at least part of the outer facing surface **124** of the thermal conductor member **120** can be disposed over the via hole **116** of the sidewall **110.** Additionally, in an implementation the thermal conductor member **120** is changeable and/or replaceable so as to be able to appropriately accommodate beverage containers having different dimensions. This allows the modularized beverage container holder **100** to be updated and/or serviced without complete replacement of the modularized beverage container holder **100.** The thermal conductor member **120** can be configured to be quickly and easily changed and/or replaced using appropriate connectors (not illustrated).

The foregoing configuration enables implementations to reduce the temperature of, for example, beer to a supercool drinking temperature after the beer has warmed from optimum serving temperature (e.g., about 38° F) to about 42° F to 45° F by the time the customer has reached their seat a few minutes after purchasing the beer. Super cool is defined as 32° F or less. Certain implementations can cool beer from higher ambient temperatures (from about 50° F to over 100° F depending how mishandled the beer is; however, such situations would be highly improbable since any venue selling beer at premium prices would have already pre-cooled the beer and made it "ready to drink" for its patrons). This is just one example of the cooling capabilities of the modularized beverage container holder **100.**

The modular engine **104** also comprises an active temperature control system that includes a solid state cooling device **132** connectable to a power supply (not shown in **FIG. 1** for clarity sake) and having a hot side **134** and a cold side **136.** In one implementation, a Peltier chip can be attached to the thermal conductor member **120** to implement the solid state cooling device **132.** The cold side **136** can be coupled a portion to the outer facing surface **124** of the thermal conductor member **120** through the via hole **116** thereby providing an active transfer of heat away from the thermal conductor member **120.** In an implementation, the cold side **136** and the hot side **134** of the thermal conductor member **120** can be reversed by changing a polarity of electricity applied to the thermal conductor member **120.**

Referring to **FIG. 1****,** the modular engine **104** further includes a thermal transfer device **140** physically coupled to the hot side **134** of the solid state cooling device **132** and absorbing and dissipating heat from the hot side **134** of the solid state cooling device **132.** The modular engine **104** may further include an adapter **143** for connecting and/or sealing the thermal transfer device **140** to the thermal conductor member **120.**

In one example configuration the thermal transfer device **140** can be a metallic radiator and can include heat pipe(s) **141** or other mechanisms that absorb and release heat (or cold) by means of phase transition. Alternatively, or in addition, a heat sink and heat transfer compound could be employed to realize the thermal transfer device **140.**

Further, the modular engine **104** can include a thermal dispersion unit **142** coupled to the thermal transfer device **140** and perform actively dispersing heat absorbed by the thermal transfer device **140.** In an example configuration illustrated by **FIG. 1****,** thermal dispersion unit **142** is implemented using a fan and/or radiative fins in order to dissipate heat (or cold) into the atmosphere; however in alternative embodiments, a circulating liquid coolant system (not shown in **FIG. 1** for clarity sake) could be used. The direction (e.g., blowing or sucking) of the fan can be controlled to adapt to different environments or placements of the modularized beverage container holder **100.** Yet further, some embodiments might rely on passive cooling using a large metal surface in contact with the thermal transfer device **140.**

According to the invention, the entire modular engine **104** and/or sleeve shaped beverage container receiver **102** can be suspended from a top frame **150** by one or more top hinge points, by means of springs, elastic bands, or other tension inducing members, and may be cantilevered out at an oblique angle, and held at a distance specific to the diameter of the top of the contacted beverage container receiver. Further, the modular engine **104** can be cantilevered from the one or more support members attached to the top frame **150,** such that the modular engine **104** is free floating. Optionally, a bottom frame **152** can be added for additional support.

Independent engine design and a pivot system allows for lateral movement (toward the center of the cup and away from the center of the cup) can be employed to achieve optimal surface contact between the cooling plates and larger vs smaller diameter beverage containers. Additional functionality includes a spring assembly that allows for competing tensions to be utilized in each modular engine thereby enabling a shearing effect of movement as different tensions allow one side to give more easily than the other side. This creates less contact tension on one side of each modular engine allowing for easier insertion and removal of the contacted plastic cup.

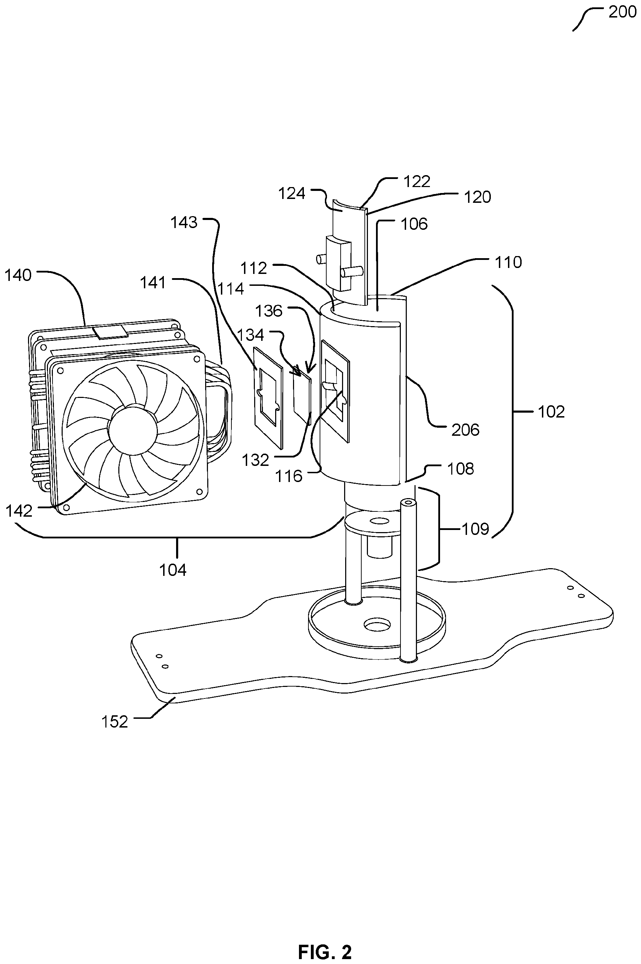

**FIG. 2** illustrates an exploded assembly drawing, side view of a modularized beverage container holder having a single cooling engine for actively cooling beverages inserted via an opening in the side.

Referring to **FIG. 2****,** the modularized beverage container holder **200** includes the same or similar components as the modularized beverage container holder **100** illustrated in **FIG. 1****.** In particular, the modularized beverage container holder **200** includes (i) the sleeve shaped beverage container receiver **102,** having the interior opening **106,** the bottom portion **108,** the centering and drainage portion **109,** the sidewall **110** or "sleeve" including the interior surface **112,** the exterior surface **114,** one or more via holes **116,** and (ii) the modular engine **104** including the thermal conductor member **120** having the inner beverage container facing surface **122** and the outer facing surface **124,** the solid state cooling device **132** having the hot side **134** and the cold side **136,** the adapter **143,** the thermal dispersion unit **142,** the heat pipe(s) **141,** and the bottom frame **152.**

The modularized beverage container holder **200** is structure and operates in a similar manner as the modularized beverage container holder **100,** except that the sleeve shaped beverage container receiver **102** of the modularized beverage container holder **200** includes an opening **206.** The opening **206** is adapted to receive beverage containers from the side, not just the top, like the modularized beverage container holder **100.** Such an embodiment could be useful where a countertop for mounting is not available and where side insertion of the beverage container is more convenient. Optionally, the opening **206** can be opened or closed using a hinged door (not illustrated).

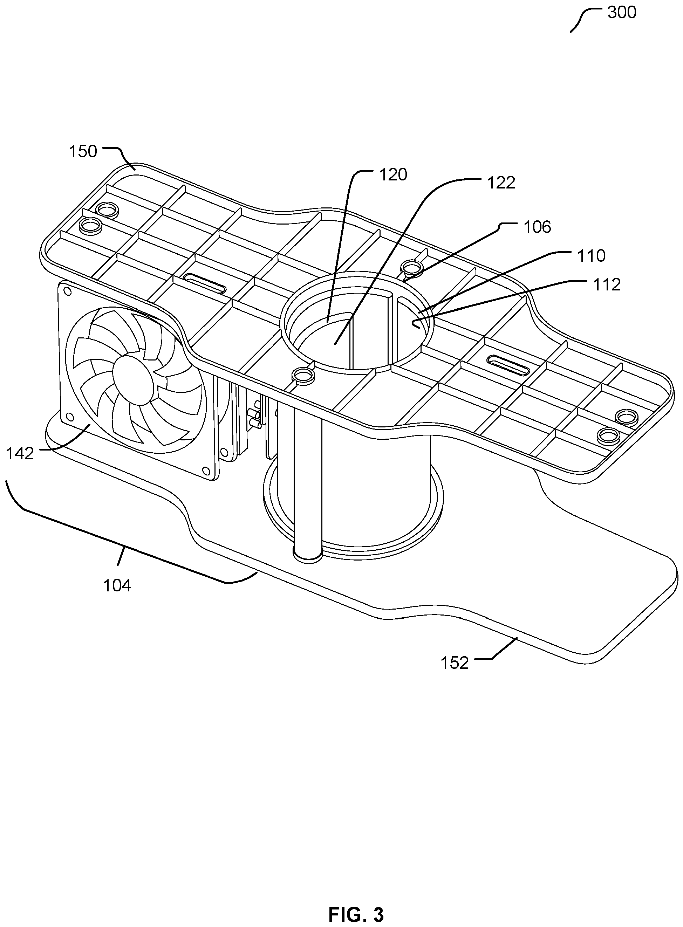

**FIG. 3** illustrates an orthogonal top view of the modularized beverage container holder of **FIG. 1****,** having a single cooling engine for actively cooling beverages inserted via an opening in the top. **FIG. 3** provides a non-exploded view of the modularized beverage container holder of **FIG. 1**.

Referring to **FIG. 3****,** the modularized beverage container holder **300** includes the same or similar components as the modularized beverage container holder **100** illustrated in **FIG. 1****.** In particular, the modularized beverage container holder **300** includes (i) the sleeve shaped beverage container receiver **102,** having the interior opening **106,** the bottom portion **108,** the centering and drainage portion **109**, the sidewall **110** or "sleeve" including the interior surface **112**, the exterior surface **114,** one or more via holes **116**, and (ii) the modular engine **104** including the thermal conductor member **120** having the inner beverage container facing surface **122** and the outer facing surface **124**, the solid state cooling device **132** having the hot side **134** and the cold side **136,** the adapter **143**, the thermal dispersion unit **142,** the heat pipe(s) **141**, and the bottom frame **152** (some of which are not illustrated in **FIG. 3**). All portions of the bottom frame **152** are not necessary and are only for illustrative purposes.

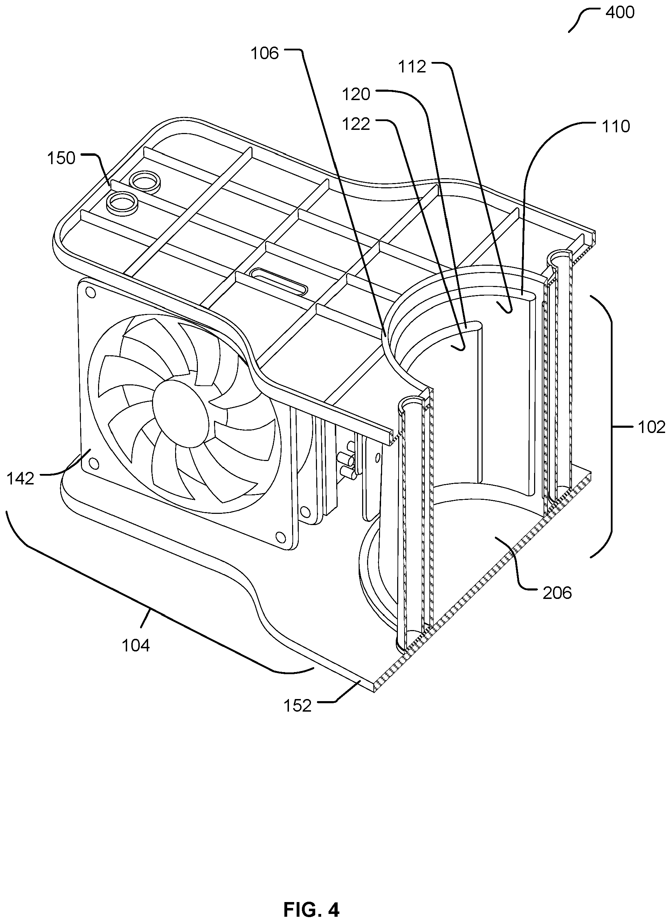

**FIG. 4** illustrates an orthogonal top view of a modularized beverage container holder having a single cooling engine for actively cooling beverages inserted via an opening in the side.

Referring to **FIG. 4**, the modularized beverage container holder **400** includes the same or similar components as the modularized beverage container holder **200** illustrated in **FIG. 2****.** In particular, the modularized beverage container holder **400** includes (i) the sleeve shaped beverage container receiver **102**, having the interior opening **106**, the bottom portion **108**, the centering and drainage portion **109**, the sidewall **110** or "sleeve" including the interior surface **112**, the exterior surface **114**, one or more via holes **116**, and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, the heat pipe(s) **141**, and the bottom frame **152** (some of which are not illustrated in **FIG. 3**). Similar to **FIG. 2**, the modularized beverage container holder **400** includes the opening **206** adapted to receive beverage containers from the side, not just the top, like the modularized beverage container holder **100.**

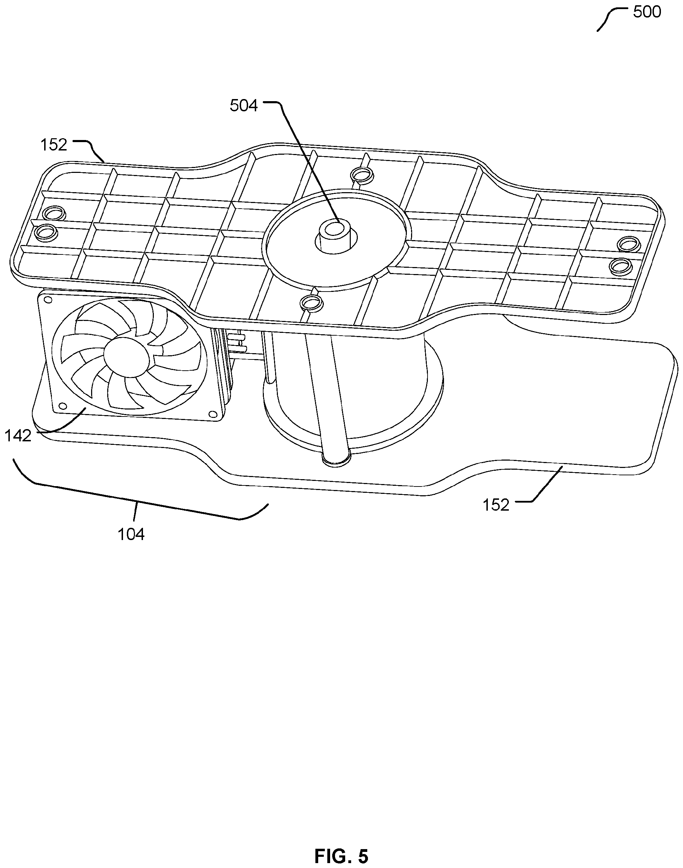

**FIG. 5** illustrates an orthogonal bottom view of a modularized beverage container holder having a single cooling engine for actively cooling beverages inserted via an opening in the top.

Referring to **FIG. 5**, the modularized beverage container holder **500** includes the same or similar components as the modularized beverage container holder **300** illustrated in **FIG. 3****.** In particular, the modularized beverage container holder **500** includes (i) the sleeve shaped beverage container receiver **102**, having the interior opening **106**, the bottom portion **108**, the centering and drainage portion **109**, the sidewall **110** or "sleeve" including the interior surface **112,** the exterior surface **114**, one or more via holes **116**, and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, the heat pipe(s) **141**, and the bottom frame **152** (some of which are not illustrated in **FIG. 4****).** All portions of the bottom frame **152** are not necessary and are only for illustrative purposes.

**FIG. 5** further illustrates a drain portion **504** of the centering and drainage portion **109** of **FIG. 1****.** The drain portion **504** can be connected to a drainage system for the purpose of allowing any condensation or other materials to be easily cleaned from the inside of the sleeve shaped beverage container receiver **102.** Also, at outdoor venues, rainwater and other debris will drain from the inside of the sleeve shaped beverage container receiver **102.**

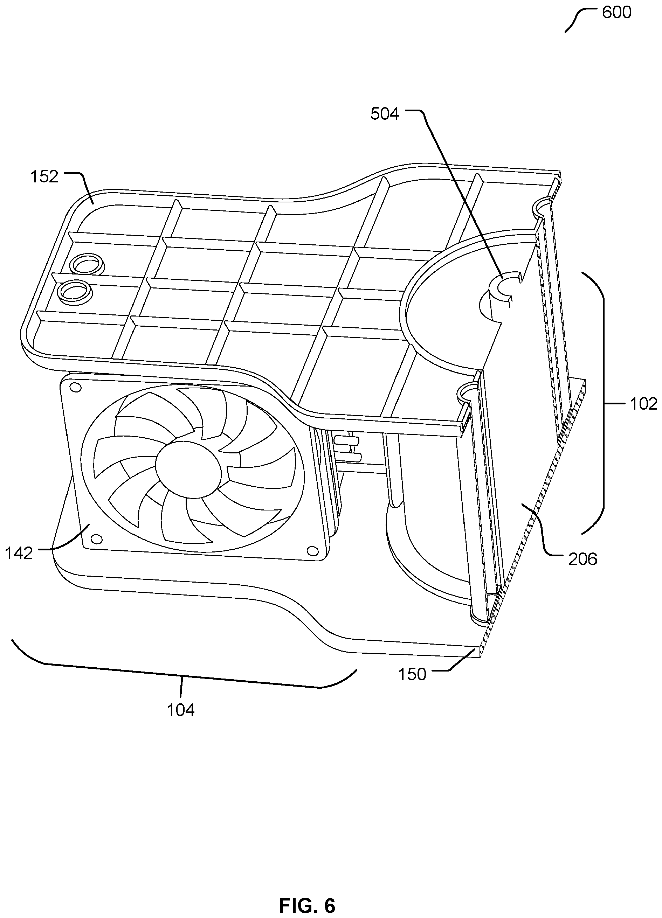

**FIG. 6** illustrates an orthogonal bottom view of a modularized beverage container holder having a single cooling engine for actively cooling beverages inserted via an opening in the side.

Referring to **FIG. 6**, the modularized beverage container holder **600** includes the same or similar components as the modularized beverage container holder **400** illustrated in **FIG. 4****.** In particular, the modularized beverage container holder **600** includes (i) the sleeve shaped beverage container receiver **102**, having the interior opening **106**, the bottom portion **108**, the centering and drainage portion **109**, the sidewall **110** or "sleeve" including the interior surface **112**, the exterior surface **114**, one or more via holes **116,** and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, the heat pipe(s) **141**, and the bottom frame **152** (some of which are not illustrated in **FIG. 5**). Similar to **FIG. 4**, the modularized beverage container holder **600** includes the opening **206** adapted to receive beverage containers from the side, not just the top, like the modularized beverage container holder **100.**

### Dual Engine Modularized Beverage Holder

**FIG. 7** illustrates an orthogonal top view of a modularized beverage container holder having a dual cooling engine configuration for actively cooling beverages inserted via an opening in the top.

Referring to **FIG. 7**, the modularized beverage container holder **700** includes the same or similar components as the modularized beverage container holder **100** illustrated in **FIG. 1****.** In particular, the modularized beverage container holder **700** includes (i) the sleeve shaped beverage container receiver **102**, having the interior opening **106**, the bottom portion **108**, the centering and drainage portion **109**, the sidewall **110** or "sleeve" including the interior surface **112**, the exterior surface **114**, one or more via holes **116**, and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152** (some of which are not illustrated in **FIG. 7**). All portions of the bottom frame **152** are not necessary and are only for illustrative purposes.

The modularized beverage container holder **700** further includes another (second) modular engine **702.** The second modular engine **702** includes the same components as the (first) modular engine **104.** Not all of the components of the second modular engine **702** are illustrated in **FIG. 7**, but a person skilled in the art would understand that the second modular engine **702** is completely or nearly identical to the first modular engine **104**, except with a different orientation. Referring to **FIG. 7**, the second modular engine **702** includes a second thermal dispersion unit **704** and a second thermal transfer device **706** optionally including include heat pipe(s) **708** or other mechanisms that absorb and release heat (or cold) by means of phase transition.

Both the first modular engine **104** and the second modular engine **702** can be used concurrently, or one at a time. **FIG. 7** illustrates both the thermal dispersion unit **142** and the second thermal dispersion unit **704** having the same orientation. However, the orientations need not be the same as illustrated in other figures. The addition of the second modular engine **702** allows for faster cooling and/or heating or the ability to maintain temperatures as the ambient temperature becomes more extreme.

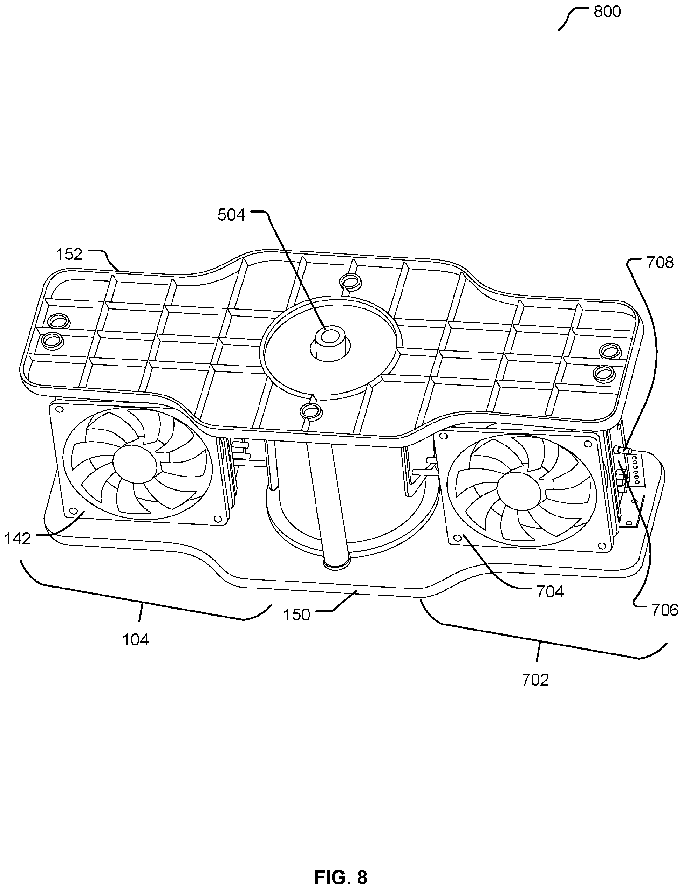

**FIG. 8** illustrates an orthogonal bottom view of a modularized beverage container holder having a dual cooling engine configuration for actively cooling beverages inserted via an opening in the top.

Referring to **FIG. 8****,** the modularized beverage container holder **800** includes the same or similar components as the modularized beverage container holder **700** illustrated in **FIG. 7****.** In particular, the modularized beverage container holder **800** includes (i) the sleeve shaped beverage container receiver **102**, having the interior opening **106**, the bottom portion **108**, the centering and drainage portion **109**, the sidewall **110** or "sleeve" including the interior surface **112**, the exterior surface **114**, one or more via holes **116**, and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152** (some of which are not illustrated in **FIG. 8**). All portions of the bottom frame **152** are not necessary and are only for illustrative purposes.

Just like **FIG. 7**, the modularized beverage container holder **800** of **FIG. 8** further includes the second modular engine **702.** The second modular engine **702** includes the same components as the (first) modular engine **104.** Not all of the components of the second modular engine **702** are illustrated in **FIG. 8**, but a person skilled in the art would understand that the second modular engine **702** is completely or nearly identical to the first modular engine **104**, except with a different orientation. Referring to **FIG. 8**, the second modular engine **702** includes the second thermal dispersion unit **704** and a second thermal transfer device **706** optionally including include heat pipe(s) **708** or other mechanisms that absorb and release heat (or cold) by means of phase transition.

Both the first modular engine **104** and the second modular engine **702** can be used concurrently, or one at a time. **FIG. 7** illustrates both the thermal dispersion unit **142** and the second thermal dispersion unit **704** having the same orientation. However, the orientations need not be the same as illustrated in other figures. The addition of the second modular engine **702** allows for faster cooling and/or heating or the ability to maintain temperatures as the ambient temperature becomes more extreme.

**FIG. 8** further illustrates the drain portion **504** of the centering and drainage portion **109** of **FIG. 1**.

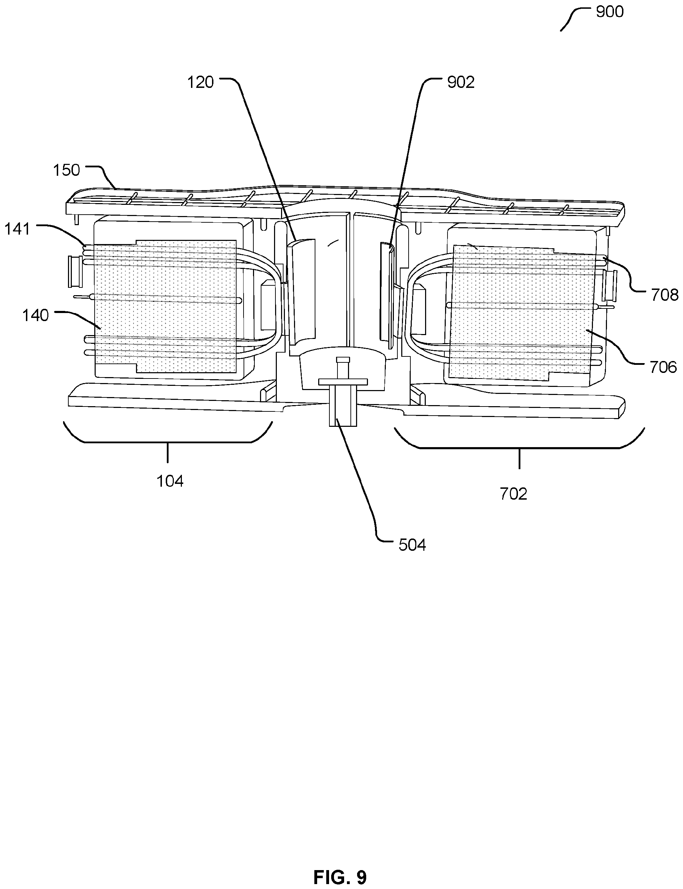

**FIG. 9** illustrates a side view of a modularized beverage container holder having a dual cooling engine configuration for actively cooling beverages inserted via an opening in the top.

Referring to **FIG. 9**, the modularized beverage container holder **900** includes the same or similar components as the modularized beverage container holder **800** illustrated in **FIG. 8****.** In particular, the modularized beverage container holder **900** includes (i) the sleeve shaped beverage container receiver **102**, having the interior opening **106**, the bottom portion **108**, the centering and drainage portion **109**, the sidewall **110** or "sleeve" including the interior surface **112**, the exterior surface **114**, one or more via holes **116**, and (ii) the modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152** (some of which are not illustrated in **FIG. 9**).

Just like **FIG. 8**, the modularized beverage container holder **900** of **FIG. 9** includes the second modular engine **702.** The second modular engine **702** includes the same components as the (first) modular engine **104.** Not all of the components of the second modular engine **702** are illustrated in **FIG. 9**, but a person skilled in the art would understand that the second modular engine **702** is completely or nearly identical to the first modular engine **104**, except with a different orientation. Referring to **FIG. 9**, the second modular engine **702** includes the second thermal dispersion unit **704** and a second thermal transfer device **706** optionally including include heat pipe(s) **708** or other mechanisms that absorb and release heat (or cold) by means of phase transition.

**FIG. 9** further illustrates that the second modular engine **702** includes a second thermal conductor member **902** having the same or similar components as the (first) thermal conductor member **120** described in detail above.

**FIG. 10** illustrates an orthogonal bottom view of a modularized beverage container holder having a dual cooling engine configuration for actively cooling beverages inserted via an opening in the top with fans directed to the same side.

Referring to **FIG. 10****,** the modularized beverage container holder **1000** includes the same or similar components as the modularized beverage container holder **900** illustrated in **FIG. 9****.** In particular, the modularized beverage container holder **1000** includes (i) the sleeve shaped beverage container receiver **102**, having the interior opening **106**, the bottom portion **108**, the centering and drainage portion **109**, the drain portion **504**, the sidewall **110** or "sleeve" including the interior surface **112**, the exterior surface **114**, one or more via holes **116**, (ii) the (first) modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152**, (iii) the second modular engine **702** including the same components as the (first) modular engine **104**, such as the second thermal dispersion unit **704**, the second thermal transfer device **706** and the heat pipe(s) **708** (some of which are not illustrated in **FIG. 10**).

**FIG. 11** illustrates an orthogonal bottom view of a modularized beverage container holder having a dual cooling engine configuration for actively cooling beverages inserted via an opening in the top with fans directed to opposite sides.

Referring to **FIG. 11****,** the modularized beverage container holder **1100** includes the same or similar components as the modularized beverage container holder **900** illustrated in **FIG. 9****.** In particular, the modularized beverage container holder **1100** includes (i) the sleeve shaped beverage container receiver **102**, having the interior opening **106**, the bottom portion **108**, the centering and drainage portion **109**, the drain portion **504**, the sidewall **110** or "sleeve" including the interior surface **112**, the exterior surface **114**, one or more via holes **116**, (ii) the (first) modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152**, (iii) the second modular engine **702** including the same components as the (first) modular engine **104**, such as the second thermal dispersion unit **704**, the second thermal transfer device **706** and the heat pipe(s) **708** (some of which are not illustrated in **FIG. 11**).

Additionally, **FIG. 11** illustrates that the first thermal dispersion unit (fan) **142** and the second thermal dispersion unit (fan) **704** are directed to opposing sides. Such a configuration can provide better thermal dispersion depending on the structure and type of installation of the modularized beverage container holder **1100.**

**FIG. 12** illustrates an exploded assembly drawing, orthogonal top view of a modularized beverage container holder having a dual cooling engine configuration for actively cooling beverages inserted via an opening in the top with fans directed to the same side.

Referring to **FIG. 12**, the modularized beverage container holder **1200** includes the same or similar components as the modularized beverage container holder **900** illustrated in **FIG. 9****.** In particular, the modularized beverage container holder **1200** includes (i) the sleeve shaped beverage container receiver **102**, having the interior opening **106**, the bottom portion **108**, the centering and drainage portion **109**, the drain portion **504**, the sidewall **110** or "sleeve" including the interior surface **112**, the exterior surface **114**, one or more via holes **116**, (ii) the (first) modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152**, (iii) the second modular engine **702** including the same components as the (first) modular engine **104**, such as the second thermal dispersion unit **704**, the second thermal transfer device **706** and the heat pipe(s) **708** (some of which are not illustrated in **FIG. 12**).

Additionally, **FIG. 12** illustrates that the second modular engine **702** includes the second thermal conductor member **902** having the same or similar components as the (first) thermal conductor member **120** described in detail above. In particular, the second thermal conductor member **902** includes an inner beverage container facing surface **1202** and an outer facing surface **1204.** The second modular engine **702** also includes a second solid state cooling (or heating) device **1206** having a cold side **1208** and a hot side **1210.** The second solid state cooling device **1206**, the cold side **1208** and the hot side **1210** are the same as or similar to the solid state cooling device **132**, the cold side **136** and the hot side **134**, as illustrated in **FIG. 1** and as described above.

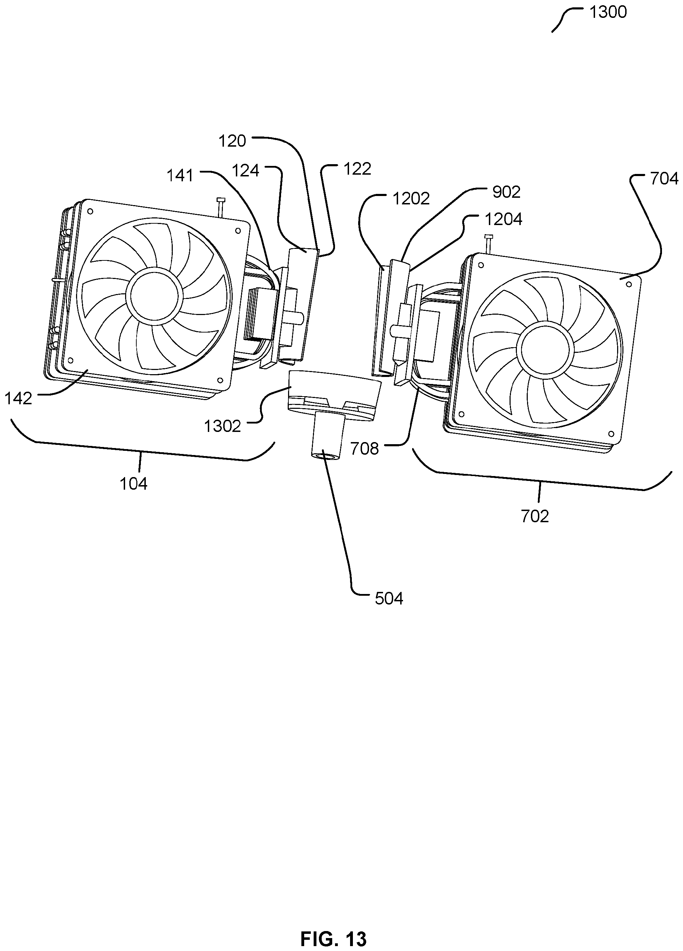

**FIG. 13** illustrates a detail view of the orthogonal bottom view of **FIG. 10** in which the beverage container receiver has been cut away to reveal internal components.

Referring to **FIG. 13**, the modularized beverage container holder **1300** includes the same or similar components as the modularized beverage container holders **900** and **1200** illustrated in **FIGS. 9** and **12**, respectively. In particular, the modularized beverage container holder **1300** includes (i) the sleeve shaped beverage container receiver **102**, having the interior opening **106**, the bottom portion **108**, the centering and drainage portion **109** including the drain portion **504** and a centering portion **1302**, the sidewall **110** or "sleeve" including the interior surface **112**, the exterior surface **114**, one or more via holes **116**, (ii) the (first) modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152**, (iii) the second modular engine **702** including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204** (some of which are not illustrated in **FIG. 13**).

**FIG. 14** illustrates a detail view of the orthogonal top and bottom views of **FIG. 11** in which the beverage container receiver has been cut away to reveal internal components.

Referring to **FIG. 14**, the modularized beverage container holder **1400** includes the same or similar components as the modularized beverage container holders **900** and **1200** illustrated in **FIGS. 9** and **12**, respectively. In particular, the modularized beverage container holder **1400** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the (first) modular engine **104** including the thermal conductor member **120** having the inner beverage container facing surface **122** and the outer facing surface **124**, the solid state cooling device **132** having the hot side **134** and the cold side **136**, the adapter **143**, the thermal dispersion unit **142**, and the bottom frame **152**, (iii) the second modular engine **702** including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204** (some of which are not illustrated in **FIG. 14**).

### Triple Engine Modularized Beverage Holder

**FIG. 15** illustrates an orthogonal top view of a modularized beverage container holder having a triple cooling engine configuration for actively cooling beverages inserted via an opening in the top.

Referring to **FIG. 15**, the modularized beverage container holder **1500** includes the same or similar components as the modularized beverage container holder **100** illustrated in **FIG. 1** and the modularized beverage container holder **700** illustrated in **FIG. 7****.** In particular, the modularized beverage container holder **1500** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, and (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204** (some of which are not illustrated in **FIG. 15**).

Further, the modularized beverage container holder **1500** includes a top frame **1510** and another (third) modular engine **1502.** The third modular engine **1502** includes the same components as the first modular engine **104** and the second modular engine **702.** Not all of the components of the third modular engine **1502** are illustrated in **FIG. 15**, but a person skilled in the art would understand that the third modular engine **1502** is completely or nearly identical to the first modular engine **104** and the second modular engine **702**, except with a different orientation. Referring to **FIG. 15**, the third modular engine **1502** includes a third thermal dispersion unit **1504** and a third thermal transfer device **1506** optionally including include heat pipe(s) **1508** or other mechanisms that absorb and release heat (or cold) by means of phase transition.

The first modular engine **104**, the second modular engine **702** and/or the third modular engine **1502** can be used concurrently, or one at a time and can have different orientations as that illustrated in **FIG. 15****.**

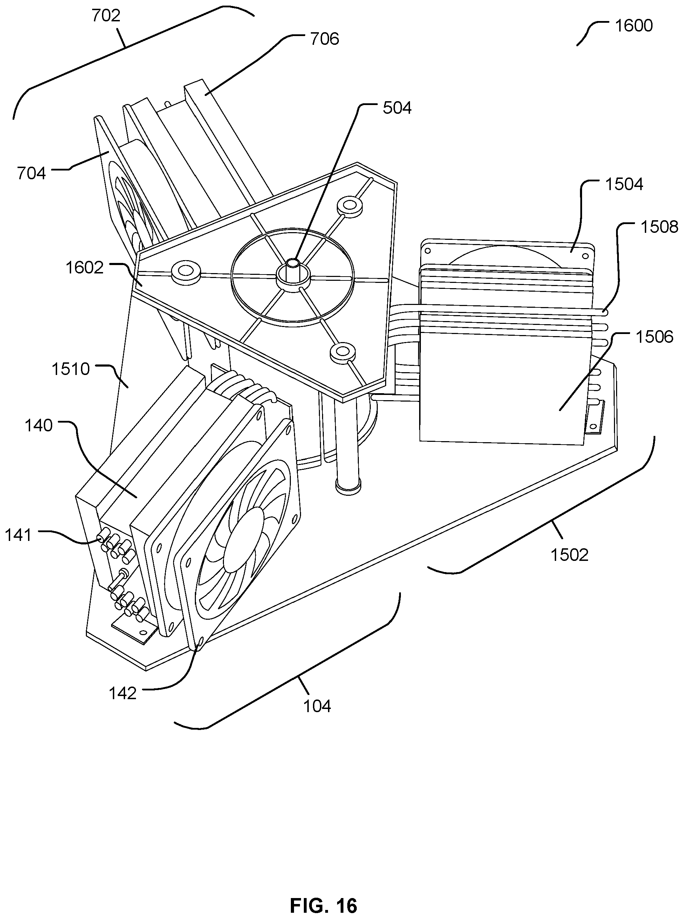

**FIG. 16** illustrates an orthogonal bottom view of a modularized beverage container holder having a triple cooling engine configuration for actively cooling beverages inserted via an opening in the top.

Referring to **FIG. 16**, the modularized beverage container holder **1600** includes the same or similar components as the modularized beverage container holder **100** illustrated in **FIG. 1**, the modularized beverage container holder **700** illustrated in **FIG. 7** and the modularized beverage container holder **1500** illustrated in **FIG. 15****.** In particular, the modularized beverage container holder **1600** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204**, (iv) the top frame **1510** and a bottom frame **1602**, and (v) the third modular engine **1502** including the third thermal dispersion unit **1504** and the third thermal transfer device **1506** and optionally including include heat pipe(s) **1508** or other mechanisms that absorb and release heat (or cold) by means of phase transition (some of which are not illustrated in **FIG. 16**).

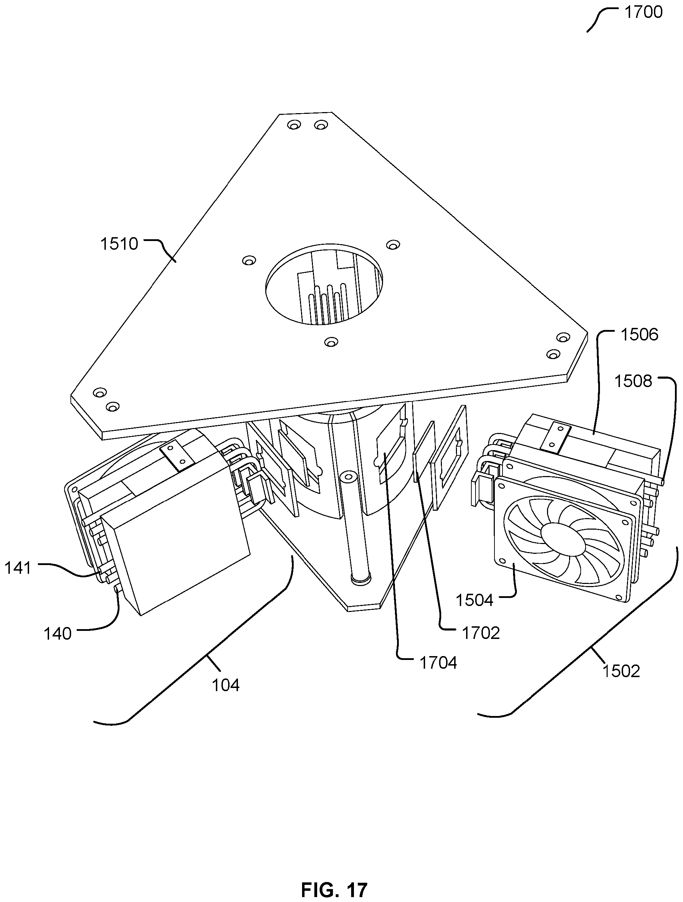

**FIG. 17** illustrates an exploded assembly drawing, orthogonal top view of a modularized beverage container holder having a triple cooling engine configuration for actively cooling beverages inserted via an opening in the top.

Referring to **FIG. 17**, the modularized beverage container holder **1700** includes the same or similar components as the modularized beverage container holder **100** illustrated in **FIG. 1**, the modularized beverage container holder **700** illustrated in **FIG. 7** and the modularized beverage container holder **1500** illustrated in **FIG. 15****.** In particular, the modularized beverage container holder **1600** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204**, (iv) the top frame **1510** and a bottom frame **1602**, and (v) the third modular engine **1502** including the third thermal dispersion unit **1504** and the third thermal transfer device **1506** and optionally including include heat pipe(s) **1508** or other mechanisms that absorb and release heat (or cold) by means of phase transition (some of which are not illustrated in **FIG. 17**). Further, **FIG. 17** illustrates that the third modular engine **1502** includes a third solid state cooling (heating) device **1702** including a hot side and a cold side and a via hole **1704.**

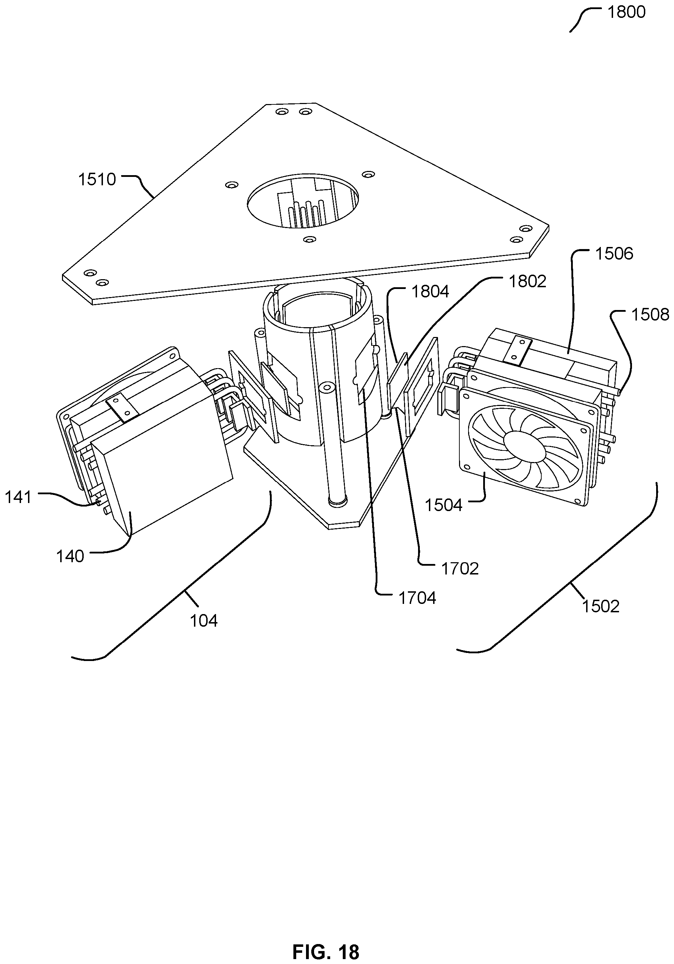

**FIG. 18** illustrates an exploded assembly drawing, orthogonal side view A of a modularized beverage container holder having a triple cooling engine configuration for actively cooling beverages inserted via an opening in the top.

Referring to **FIG. 18**, the modularized beverage container holder **1800** includes the same or similar components as the modularized beverage container holder **100** illustrated in **FIG. 1**, the modularized beverage container holder **700** illustrated in **FIG. 7** and the modularized beverage container holder **1500** illustrated in **FIG. 15****.** In particular, the modularized beverage container holder **1600** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204**, (iv) the top frame **1510** and a bottom frame **1602**, and (v) the third modular engine **1502** including the third thermal dispersion unit **1504** and the third thermal transfer device **1506** and optionally including include heat pipe(s) **1508** or other mechanisms that absorb and release heat (or cold) by means of phase transition (some of which are not illustrated in **FIG. 18**). Further, **FIG. 18** illustrates that the third modular engine **1502** includes the third solid state cooling (heating) device **1702** including a hot side **1802** and a cold side **1804** and the via hole **1704.**

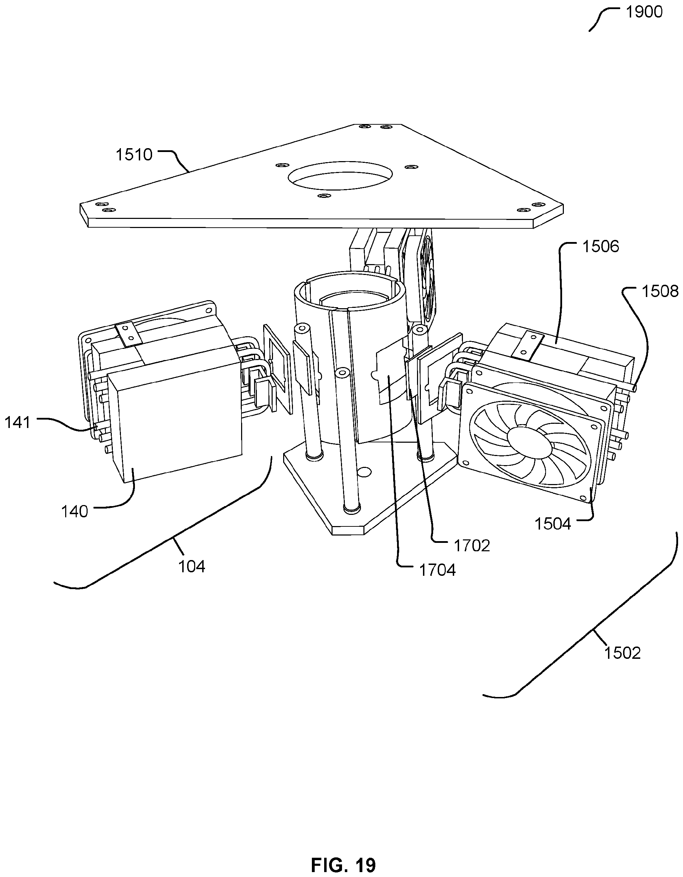

**FIG. 19** illustrates an exploded assembly drawing, orthogonal side view B of a modularized beverage container holder having a triple cooling engine configuration for actively cooling beverages inserted via an opening in the top.

Referring to **FIG. 19**, the modularized beverage container holder **1900** includes the same or similar components as the modularized beverage container holder **100** illustrated in **FIG. 1**, the modularized beverage container holder **700** illustrated in **FIG. 7** and the modularized beverage container holder **1500** illustrated in **FIG. 15****.** In particular, the modularized beverage container holder **1600** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204**, (iv) the top frame **1510** and a bottom frame **1602**, and (v) the third modular engine **1502** including the third thermal dispersion unit **1504** and the third thermal transfer device **1506** and optionally including include heat pipe(s) **1508** or other mechanisms that absorb and release heat (or cold) by means of phase transition (some of which are not illustrated in **FIG. 19**). Further, **FIG. 19** illustrates that the third modular engine **1502** includes the third solid state cooling (heating) device **1702** including a hot side **1802** and a cold side **1804** and the via hole **1704** (some of which are not illustrated in **FIG. 19**).

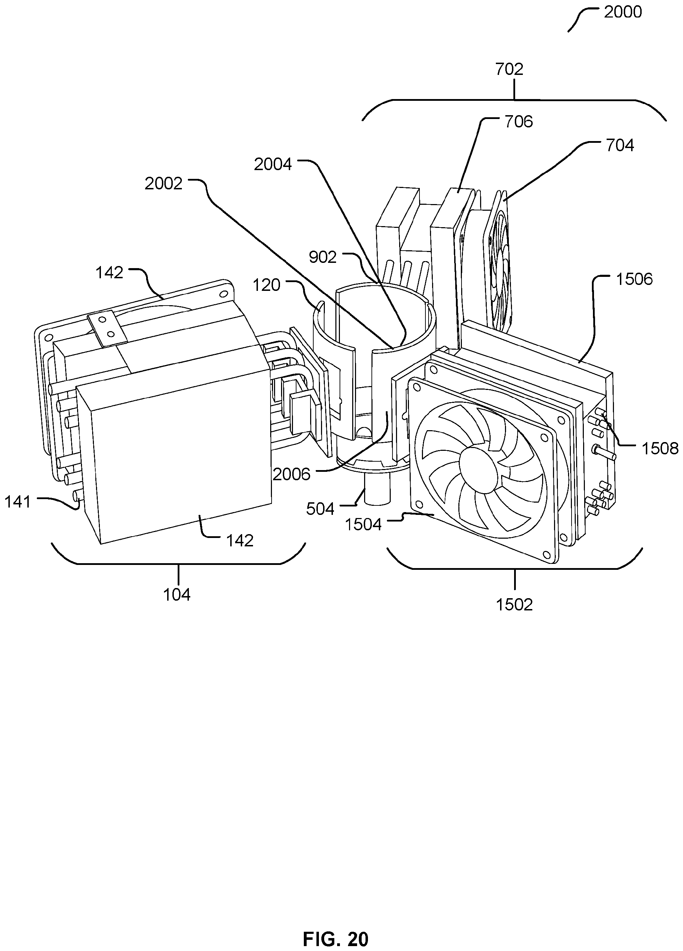

**FIG. 20** illustrates a detail view of the orthogonal side view B of **FIG. 19** in which the beverage container receiver and frame have been cut away to reveal internal components.

Referring to **FIG. 20**, the modularized beverage container holder **2000** includes the same or similar components as the modularized beverage container holder **100** illustrated in **FIG. 1**, the modularized beverage container holder **700** illustrated in **FIG. 7** and the modularized beverage container holder **1500** illustrated in **FIG. 15****.** In particular, the modularized beverage container holder **2000** includes (i) the sleeve shaped beverage container receiver **102**, having the interior opening **106**, the bottom portion **108**, the centering and drainage portion **109** including the drain portion **504** and the centering portion **1302**, the sidewall **110** or "sleeve" including the interior surface **112**, the exterior surface **114**, one or more via holes **116**, (ii) the modular engine **104** including the thermal conductor member **120** having the inner beverage container facing surface **122** and the outer facing surface **124**, the solid state cooling device **132** having the hot side **134** and the cold side **136**, the adapter **143**, and the thermal dispersion unit **142**, (iii) the second modular engine **702** (see **FIG. 7**) including the same components as the (first) modular engine **104**, such as the second thermal dispersion unit **704**, the second thermal transfer device **706** and the heat pipe(s) **708**, where the second modular engine **702** includes the second thermal conductor member **902** including the inner beverage container facing surface **1202** and the outer facing surface **1204**, (iv) the top frame **1510** and a bottom frame **1602**, and (v) the third modular engine **1502** including the third thermal dispersion unit **1504** and the third thermal transfer device **1506** and optionally including include heat pipe(s) **1508** or other mechanisms that absorb and release heat (or cold) by means of phase transition (some of which are not illustrated in **FIG. 20**). Further, **FIG. 20** illustrates that the third modular engine **1502** includes the third solid state cooling (heating) device **1702** including the hot side **1802** and the cold side **1804** and the via hole **1704** (some of which are not illustrated in **FIG. 20**).

Additionally, **FIG. 20** illustrates that the third modular engine **1502** includes a thermal conductor member **2002** having an inner beverage container facing surface **2004** and an outer facing surface **2006.**

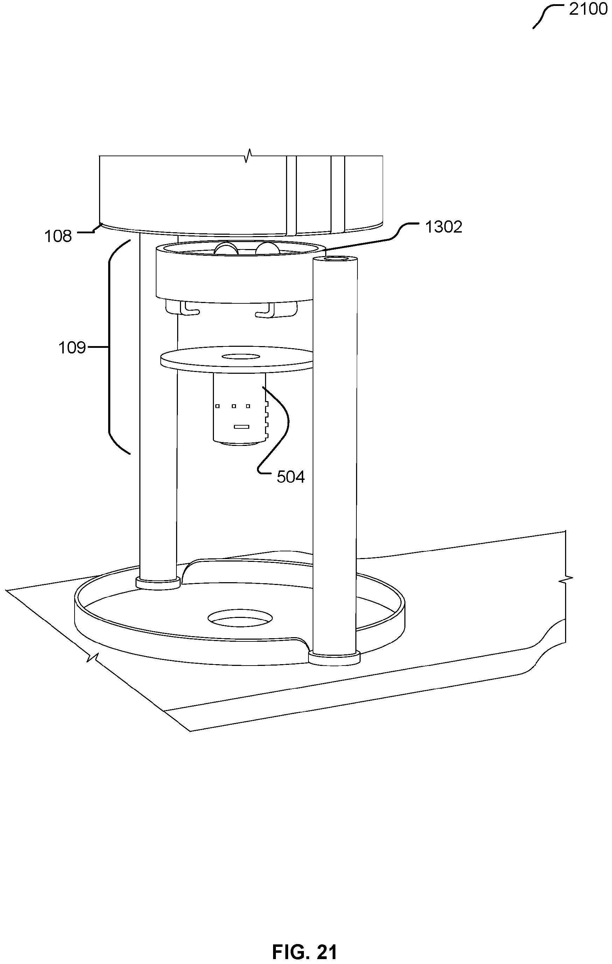

**FIG. 21** illustrates an exploded assembly drawing, orthogonal side view of a drainage assembly with centering bumps positioned at the bottom of a modularized beverage container holder.

Referring to **FIG. 21** a portion **2100** of the modularized beverage holder of any of **FIGS. 1** to **20** is illustrated. The portion **2100** includes the bottom portion **108** and the drainage portion **109** including the drain portion **504** and the centering portion **1302.** In this embodiment, the drain portion **504** connects to the centering portion **1302.** As described earlier, the combination of elements illustrated in portion **2100** allow for centering of the beverage container and allow proper drainage of the sleeve shaped beverage container receiver 102 (see **FIG. 1**). The drain portion **504** is adapted to connect to a longer drain pipe or hose and is ideally composed of a flexible and durable material.

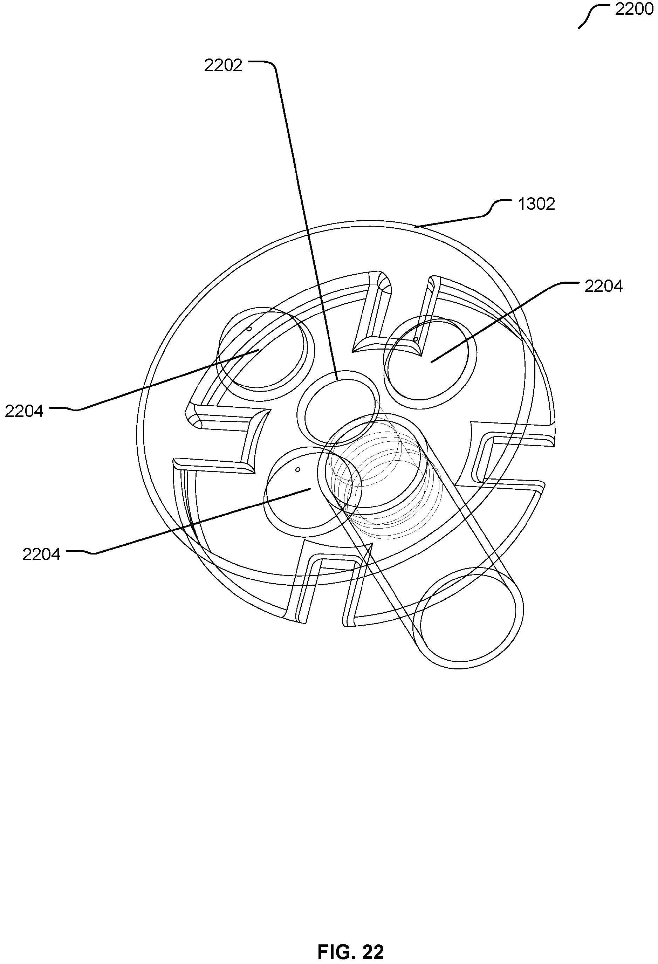

**FIG. 22** illustrates an orthogonal top view of a drainage assembly with centering bumps positioned at the bottom of a modularized beverage container holder.

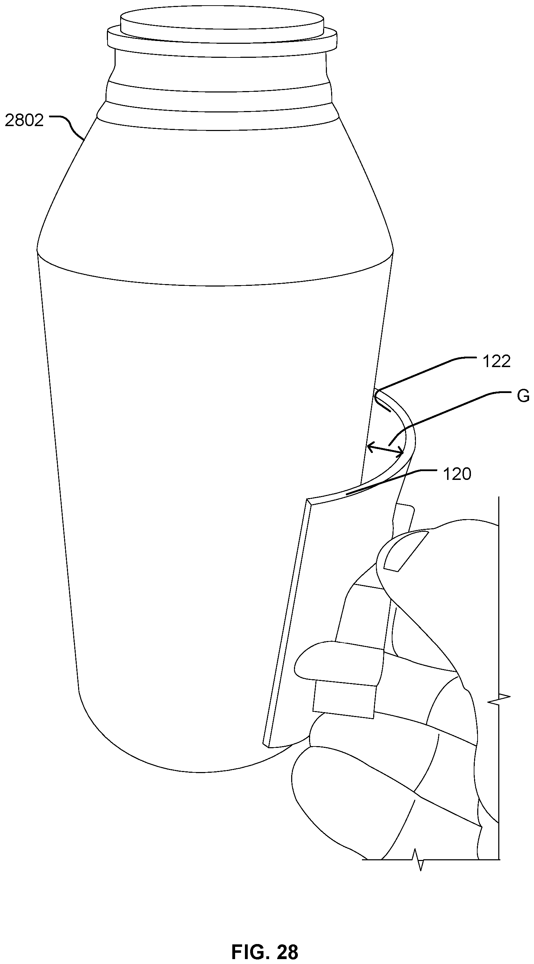

Referring to **FIG. 22**, the drainage assembly **2200** (e.g., the centering and drainage portion **109**) includes the centering portion **1302** which has one or more centering bumps **2204.** The one or more centering bumps **2204** are arranged so as to center the beverage container. Further, the one or more centering bumps **2204** are arranged to center a standard size aluminum can, such that the walls of the standard size aluminum can do not touch, for example, any of the thermal conductors **120**, **902** and/or **2002.** In the United States a standard size aluminum can has a diameter of approximately 2.6 inches. Other countries may have other standard diameters. Standard diameters may change. The modularized beverage holder described herein can be adapted to receive and create the desired contact with standard size aluminum cans, even if the standard sizes change and can also be adapted to receive and create the desired contact with specialty sized aluminum cans. The one or more centering bumps **2204** are located in the bottom of the sleeve shaped beverage container receiver **102** and function to keep, for example, a 16 ounce aluminum pint bottle, or other container with a domed, convex bottom, centered in the cup holder; this helps prevent direct contact of the aluminum surface at the upper portions of the can with the cooling plates, which can diminish cooling performance. (see e.g., **FIG. 28**)

As illustrated in **FIG. 22**, the centering portion **1302** also includes a drainage hole **2202** that allows drainage to pass to the drain portion **504.**

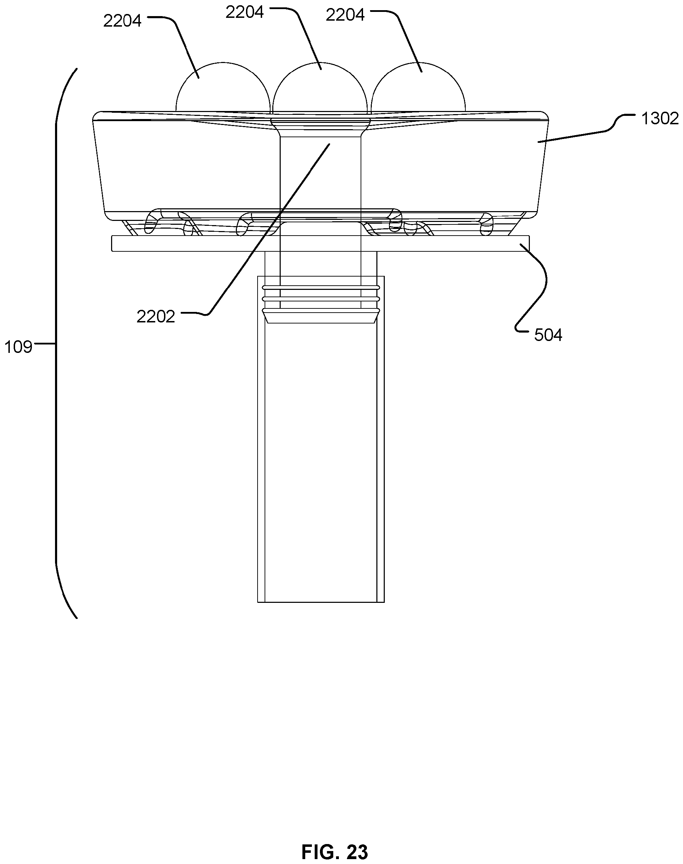

**FIG. 23** illustrates a side view of a drainage assembly with centering bumps positioned at the bottom of a modularized beverage container holder.

Referring to **FIG. 23**, which similar to **FIG. 22**, the centering and drainage portion **109** includes the centering portion **1302** which has one or more centering bumps **2204.** The one or more centering bumps **2204** are arranged so as to center the beverage container. Further, the one or more centering bumps **2204** are arranged to center a standard size aluminum can, such that the walls of the standard size aluminum can do not touch, for example, any of the thermal conductors **120**, **902** and/or **2002.** As illustrated in **FIG. 23**, the centering portion **1302** also includes a drainage hole **2202** that allows drainage to pass to the drain portion **504.**

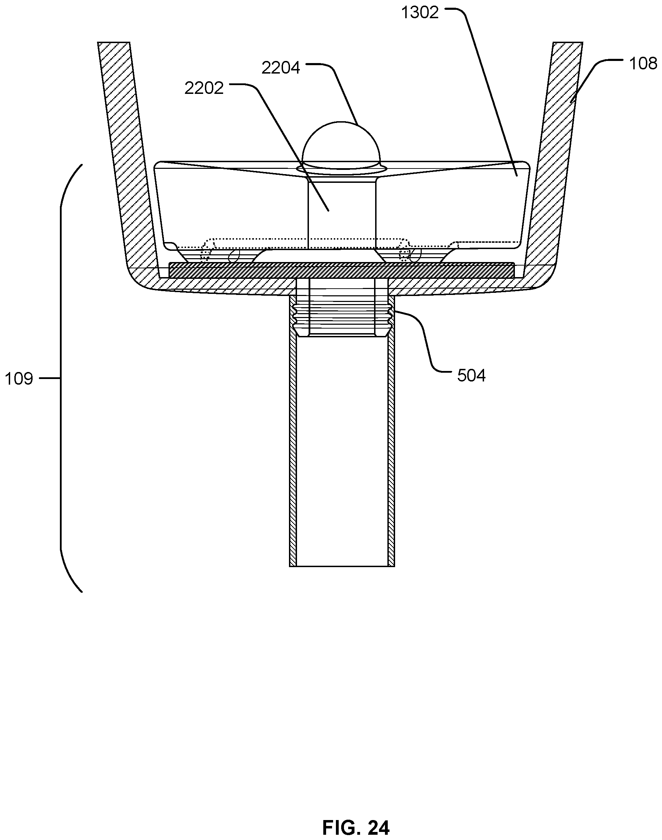

**FIG. 24** illustrates a cross-sectional side view of a drainage assembly with centering bumps inserted into the beverage container receiver.

Referring to **FIG. 24**, the centering and drainage portion **109**, as inserted into the bottom portion **108** of the sleeve shaped beverage container receiver **102** is illustrated. The centering and drainage portion **109** includes the centering portion **1302** which has one or more centering bumps **2204.** The one or more centering bumps **2204** are arranged so as to center the beverage container. Further, the one or more centering bumps **2204** are arranged to center a standard size aluminum can, such that the walls of the standard size aluminum can do not touch, for example, any of the thermal conductors **120**, **902** and/or **2002.** As illustrated in **FIG. 23**, the centering portion **1302** also includes a drainage hole **2202** that allows drainage to pass to the drain portion **504.**

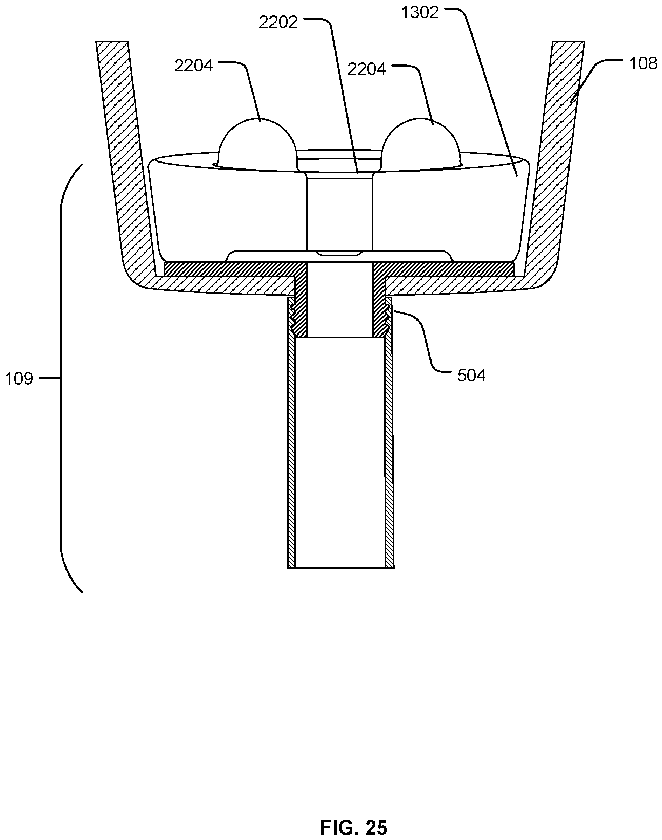

**FIG. 25** illustrates a cross-sectional side view of a drainage assembly with centering bumps inserted into the beverage container receiver.

Similar to **FIG. 24**, **FIG. 25** illustrates the centering and drainage portion **109**, as inserted into the bottom portion **108** of the sleeve shaped beverage container receiver **102** is illustrated. The centering and drainage portion **109** includes the centering portion **1302** which has one or more centering bumps **2204.** The one or more centering bumps **2204** are arranged so as to center the beverage container. Further, the one or more centering bumps **2204** are arranged to center a standard size aluminum can, such that the walls of the standard size aluminum can do not touch, for example, any of the thermal conductors **120**, **902** and/or **2002.** As illustrated in **FIG. 23**, the centering portion **1302** also includes a drainage hole **2202** that allows drainage to pass to the drain portion **504.**

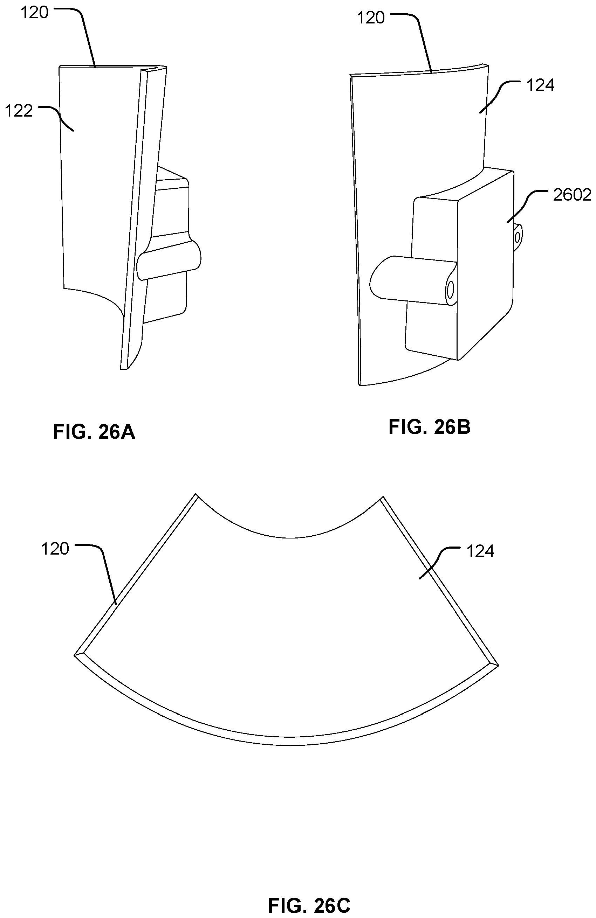

**FIG. 26A, 26B**, and **26C** illustrate side view A, side view B and side view C of a thermal conductor.

Referring to **FIGS 26A, 26B**, and **26C**, the first thermal conductor member **120** of **FIG. 1** is illustrated, which is the same as or similar to the second thermal conductor member **902** of **FIG. 9** and/or the third thermal conductor member **2002** of **FIG. 20****.** As illustrated, the first thermal conductor member **120** has a curvature to be able to maintain constant contact with a cup or bottle and to maintain a constant air gap between the standard size aluminum can and the inner beverage container facing surface **122.** The outer facing surface **124** of the first thermal conductor member **120** includes an interfacing surface **2602** for attaching to, for example, the first solid state cooling device **132.**

**FIG. 27** illustrates a direct contact between a cup and a thermal conductor.

Referring to **FIG. 27**, when a cup or container **2702** is inserted into the sleeve shaped beverage container receiver **102**, the inner beverage container facing surface **122** maintains continuous contact with a side wall of the cup or container **2702.** As mentioned above, the structure of the sleeve shaped beverage container receiver **102** is such that even if the cup or container **2702** has a wider diameter that the sleeve shaped beverage container receiver **102** when it is in resting position, the sleeve shaped beverage container receiver **102**, including the first thermal conductor member **120** will expand to accommodate the cup or container **2702** to maintain contact for optimal cooling or heating.

The first thermal conductor member **120** can be made completely or partially of copper and be designed to provide cooling toward the top of the plastic cup thereby maximizing the cold experience for the patron as the beer at the top of the cup is the first beer consumed. In an embodiment, thermal conductors are configured to maximize contact points on the side walls of a venue-defined set of plastic beer cups. That set typically consists of two sizes and shapes of cups: a large cup (e.g., about 24 ounces) and a small cup (e.g., about 16 ounces). 3D scans of the profile of each cup enable the design and manufacture of contoured cooling plates that are intended to maximize the contact cooling surface area in the larger cup while allowing for as many contact points as possible on the smaller cup. From venue to venue as the size and contour of cups vary, differently dimensioned cooling plates are not only possible but desirable for maximum cooling.

**FIG. 28** illustrates an air gap formed between a standard diameter aluminum beverage can and a thermal conductor.

Referring to **FIG. 28****,** when a standard size aluminum can **2802** is inserted into the sleeve shaped beverage container receiver **102**, the inner beverage container facing surface **122** maintains a continuous air gap **G** between a side wall of the standard size aluminum can **2802.** For aluminum cans, this continuous air gap **G** provides better performance when cooling or heating a beverage.

Air gaps **G** of 0.5 mm to 2 mm have been implemented. One present embodiment employs an air gap **G** of 0.1 mm to 1 mm, which is a configuration that has been found to work well. In an alternative embodiment, contact with the aluminum container can be made only or primarily with the bottom of the container and then a gradual air gap from 0.1 mm to 1 mm is desirable with the air gap being smaller towards the bottom of the aluminum container and gradually getting larger towards the top of the aluminum container. A predominant portion of the surface of the aluminum bottle can be kept inside the beverage container holder **102.** When cooling, contact with an aluminum pint bottle (or can), in which a large portion of the cans' surface area is exposed to the elements, is not desirable due to the thermal conductivity of the aluminum itself. Contact along the side of an aluminum pint bottle (or can), especially along its upper region, in this instance creates a scenario in which the heat moves from the atmosphere (warm) to the aluminum and to the cold plates (cold) causing the cold plates to underperform (warm) and ultimately create an adverse condition of heating the beer at the top of the can. The principal of thermal equilibrium mandate the following: heat always moves from a hot object to a cold object.

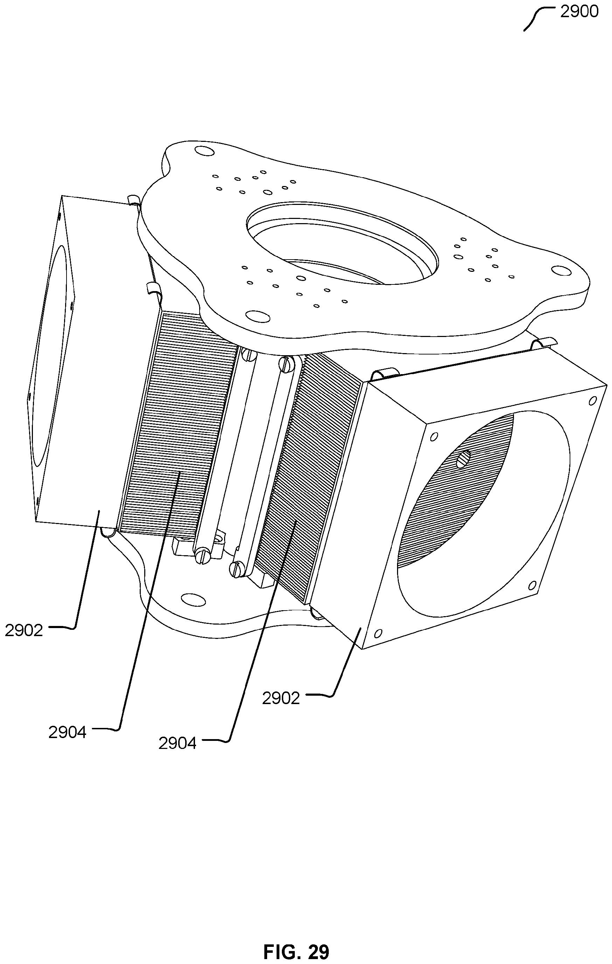

**FIG. 29** illustrates an orthogonal side view of an alternate embodiment of a modularized beverage container holder having a triple cooling engine configuration for actively cooling beverages inserted via an opening in the top.

Referring to **FIG. 29**, the modularized beverage container holder **2900** includes fans **2902** blowing or sucking air in a direction of a thermal transfer device **2904** (e.g., a radiator). Other components of the modularized beverage container holder **2900** are similar to those described with reference to **FIGS. 1-29****.**

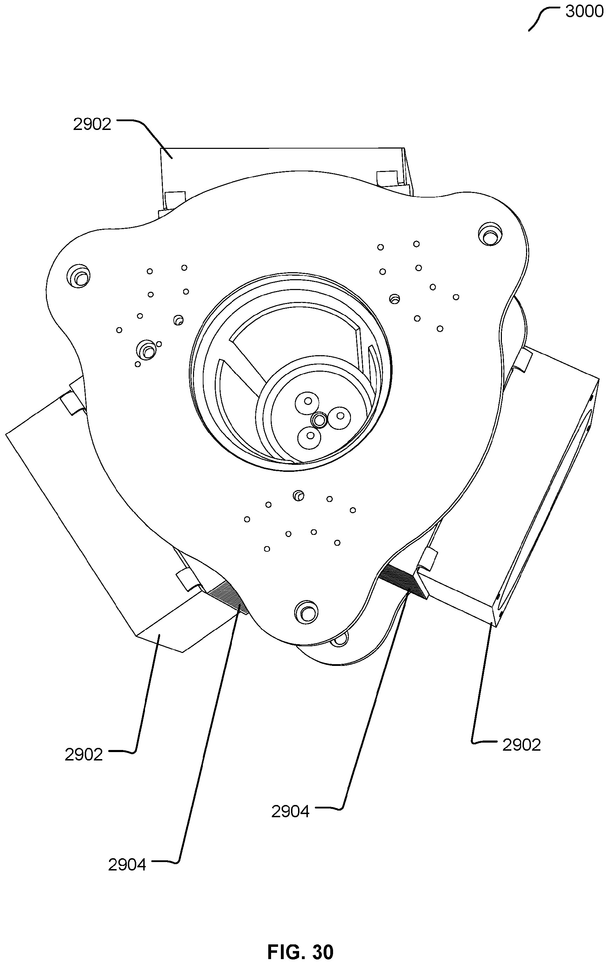

**FIG. 30** illustrates an orthogonal top view of the alternate embodiment of a modularized beverage container holder having a triple cooling engine configuration for actively cooling beverages inserted via an opening in the top.

Referring to **FIG. 30**, the modularized beverage container holder **3000** includes fans 2902 blowing or sucking air in a direction of a thermal transfer device **2904** (e.g., a radiator). Other components of the modularized beverage container holder **3000** are similar to those described with reference to **FIGS. 1-29****.**

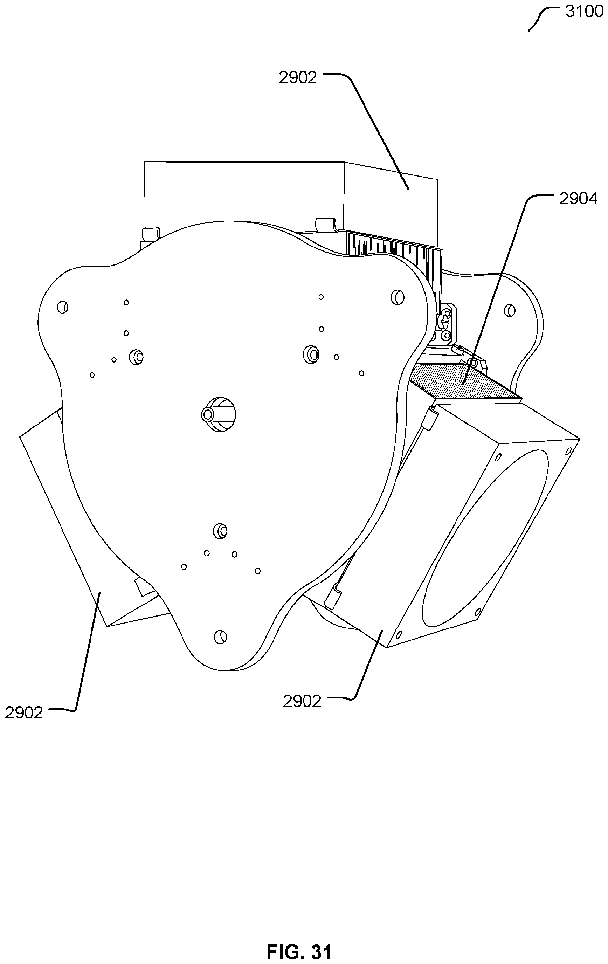

**FIG. 31** illustrates an orthogonal bottom view of the alternate embodiment of a modularized beverage container holder having a triple cooling engine configuration for actively cooling beverages inserted via an opening in the top.

Referring to **FIG. 31**, the modularized beverage container holder **3100** includes fans 2902 blowing or sucking air in a direction of a thermal transfer device **2904** (e.g., a radiator). Other components of the modularized beverage container holder **3100** are similar to those described with reference to **FIGS. 1-29****.**

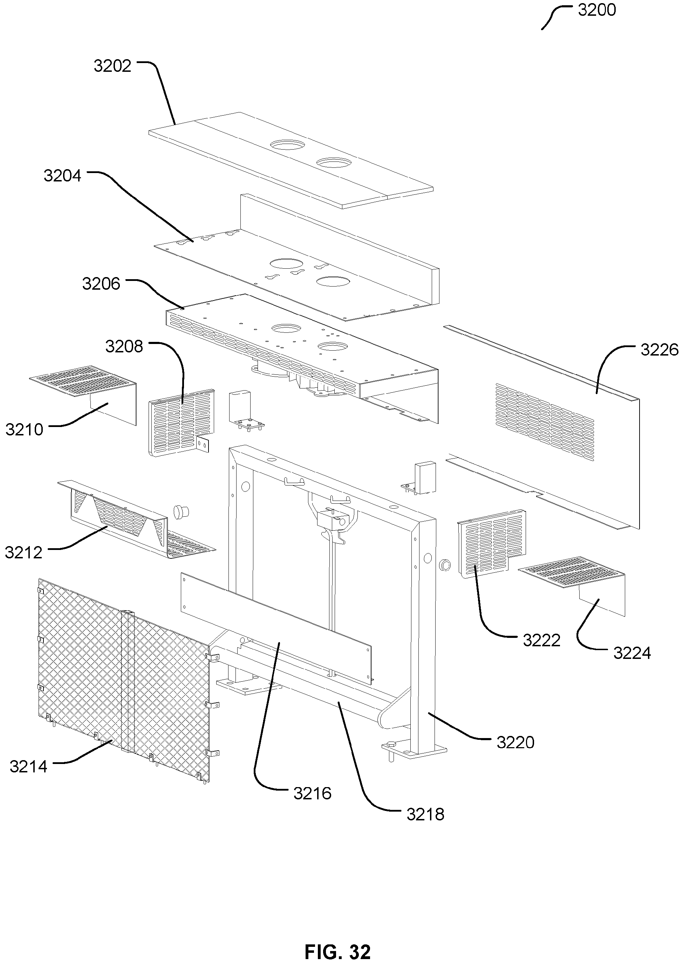

**FIG. 32** illustrates an exploded assembly view of a drink rail installation.

Referring to **FIG. 32**, a drink rail installation **3200** is illustrated, where the drink rail installation **3200** is for mounting a modularized beverage holder for use at a stadium or similar venue. The drink rail installation **3200** includes a wood (or similar) top **3202**, a countertop metal (or similar) pan **3204**, side gusset panels **3208** and **3222**, upper breathers **3210** and **3224**, a center breather **3212**, a modesty panel **3214**, a foot rail **3218**, an electrical cover **3216**, a rail base frame **3220**, and a front cover panel **3226**, among other components illustrated in **FIG. 32**.

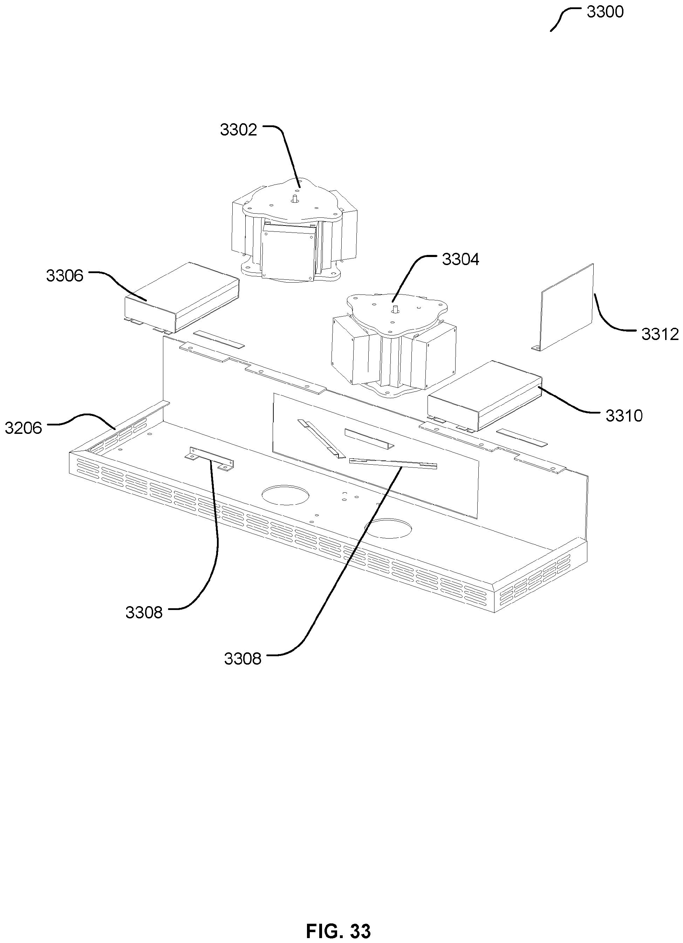

**FIG. 33** illustrates an exploded assembly detail view of a drink rail installation.

Referring to **FIG. 33**, a drink rail installation **3300** is illustrated, where the drink rail installation **3300** is for mounting modularized beverage holders **3302** and **3304** for use at a stadium or similar venue. The drink rail installation **3300** includes a top deck pan **3206**, one or more brackets **3308**, power supplies **3306** and **3310**, an air plow baffle **3312**, among other components illustrated in **FIG. 33****.**

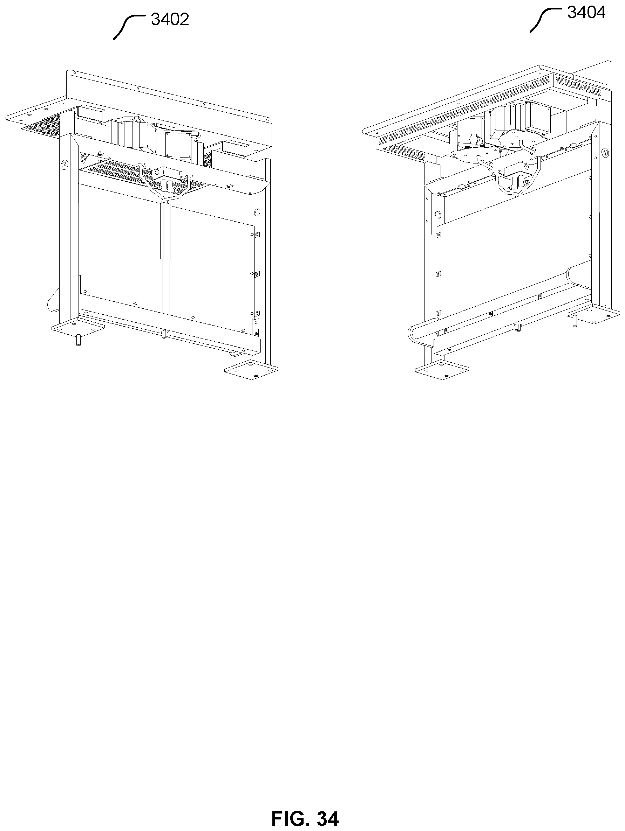

**FIG. 34** illustrates bottom, rear, right side isometric view and a bottom, front, right side isometric view of an assembled drink rail.

Referring to **FIG. 34**, a bottom, rear, right side isometric view of an assembled drink rail **3402** and a bottom, front, right side isometric view of an assembled drink rail **3404** are illustrated. These drink rails **3402** and **3404** contain the same or similar components as illustrated and as described with reference to **FIGS. 31-33****.**

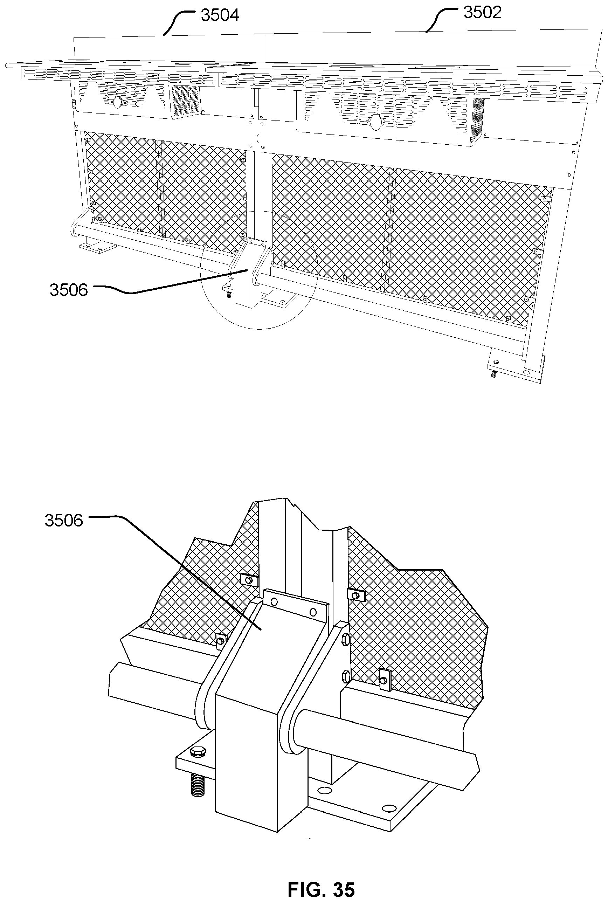

**FIG. 35** illustrates a front elevation detail view of a drink rail installation with conduit channels.

Referring to **FIG. 35**, two drink rails **3502** and **3504** are illustrated, where the two drink rails **3502** and **3504** are connected and share a conduit cover **3506.**

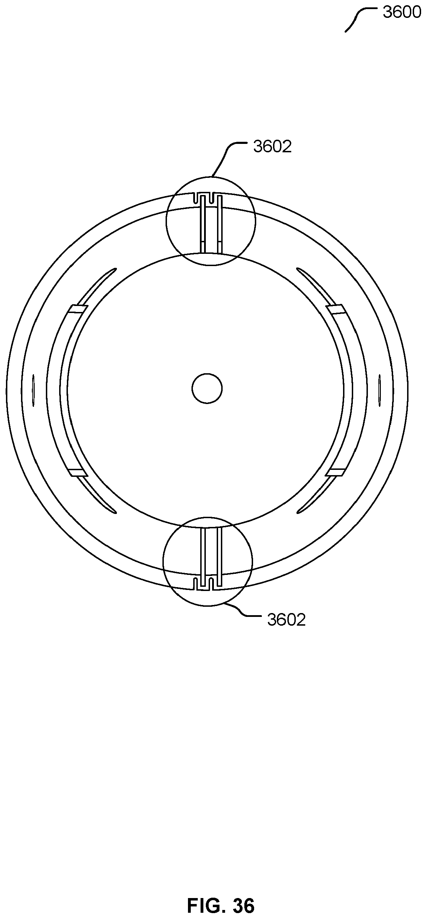

**FIG. 36** illustrates a top view of a beverage container receiver having an accordion type hinge.

Referring to **FIG. 36**, a sleeve shaped beverage container receiver **3600**, similar or the same as the sleeve shaped beverage container receiver **102** of **FIG. 1**, is illustrated. As illustrated, the sleeve shaped beverage container receiver **3600** has a unibody structure with one or more accordion type hinges **3602.** These one or more accordion type hinges **3602** allow the sleeved shaped beverage container **3600** and the components thereof to adjust to different sizes of beverage containers.

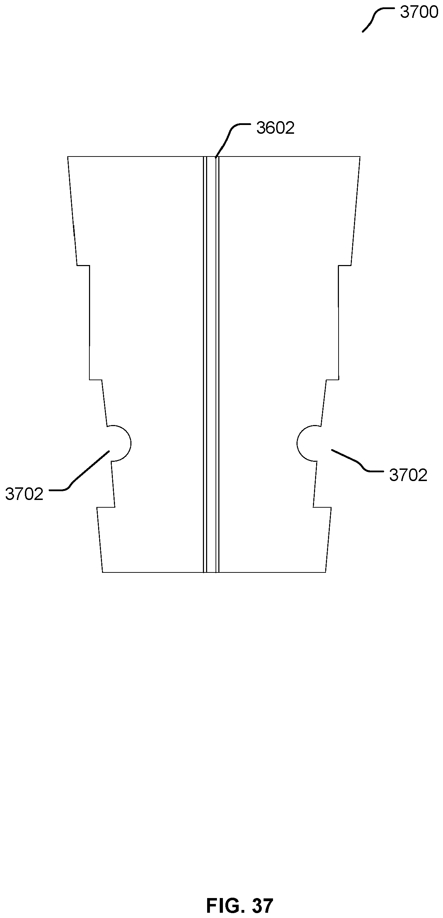

**FIG. 37** illustrates a side view of a beverage container receiver for use with a dual engine configuration for actively cooling beverages inserted into the top.

Referring to **FIG. 37**, a sleeve shaped beverage container receiver **3700**, similar or the same as the sleeve shaped beverage container receiver **102** of **FIG. 1**, is illustrated. As illustrated, the sleeve shaped beverage container receiver **3700** has a unibody structure with one or more accordion type hinges **3602.** These one or more accordion type hinges **3602** allow the sleeved shaped beverage container **3600** and the components thereof to adjust to different sizes of beverage containers. Further, the sleeve shaped beverage container receiver **3700** includes one or more via holes **3702** for receiving a modular engine, such as the first modular engine **104** of **FIG. 1**.

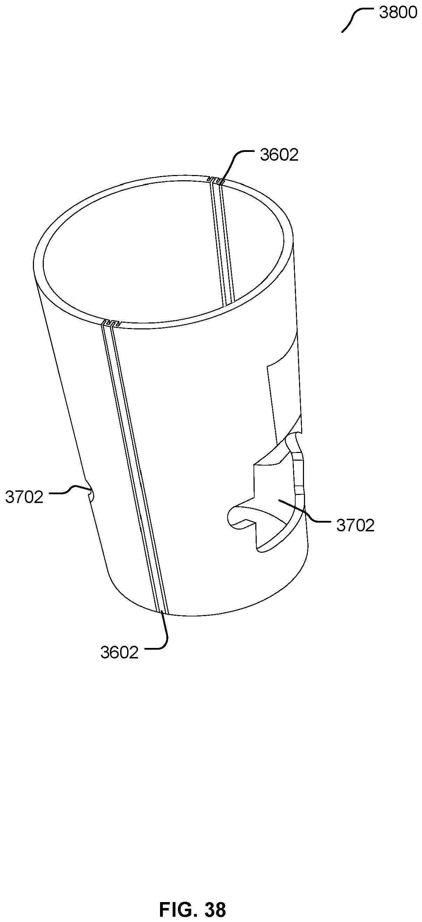

**FIG. 38** illustrates an orthogonal top view of a beverage container receiver for use with a dual engine configuration for actively cooling beverages inserted into the top.

Referring to **FIG. 38****,** a sleeve shaped beverage container receiver **3800,** similar or the same as the sleeve shaped beverage container receiver **102** of **FIG. 1****,** is illustrated. As illustrated, the sleeve shaped beverage container receiver **3800** has a unibody structure with one or more accordion type hinges **3602.** These one or more accordion type hinges **3602** allow the sleeved shaped beverage container **3600** and the components thereof to adjust to different sizes of beverage containers. Further, the sleeve shaped beverage container receiver **3800** includes one or more via holes **3702** for receiving a modular engine, such as the first modular engine **104** of **FIG. 1**.

### Additional Implementations

In some implementations, modular (Peltier) engines are designed to be removable and can be removed and/or installed without the use of specialized tools. This enables one with a technical knowhow specifically related to design elements to remove a failed modular (Peltier) engine and replace it with a new one. A waterproof electrical connector is employed that merely requires a twist-off of the failed unit and a twist-on of the new one.

In other implementations, a controller can be added to the modularized beverage holder for (i) responding to information received from various sensors such as presence sensors and ambient temperature sensors, beverage container temperature sensors and other temperature sensors placed at various locations in the holder by controlling various aspects of the holder accordingly, (ii) adjusting a rate of cooling and/or heating (e.g., low, medium, high, maintain a specific desired temperature) according to information collected or options selected using a switch or other type of input device such as a touch screen or a smart phone or tablet, (iii) controlling the polarity of electricity provided to the cooling/heating device to switch from cooling to heating and vice versa, (iv) running a maintenance/cleaning cycle to defrost and drain, (v) alternating performance and control of the various modular engines, (vi) update a smartphone or tablet connected (wired or wirelessly) to the modularized beverage holder to provide performance information, temperature information and to receive control inputs from the smartphone or tablet, and (vii) adjust a location of one or more of the thermal conductor members to create an air gap or direct contact with the beverage container based on a user selection and or information received from a detector that, for example, detects whether the beverage container is plastic, aluminum, glass or any other type of material.

### Freezing Temperature of Beer

While there are numerous factual accountings of the freezing point of beer, all seem to be based on taking a known cooling process, a known beer package, and testing from that point forward. The following are different, somewhat contradictory, examples describing the freezing characteristics of beer. In general light beers are stated to freeze at higher temperatures, typically around 29° F while heavier beers freeze at somewhat lower temperatures. Here are various examples, incorporated herein by reference, regarding the freezing temperature of beer: (i) www.reference.com/food/temperature-beer-freeze-2bd3090982d0e215; (ii) www.homebrewtalk.com/showthread.php?t=176193; (iii) infogr.am/freezing-temperature-of-beer; and (iv) www.darylscience.com/Demos/BeerFreeze.html.

### Further Implementations Regarding Modular Engineering Allows for Installation into Existing Facilities

Successful stadiums, arenas, concert halls, outdoor/pool and sports-themed bars/restaurants evolve over time through facility upgrades. The disclosed modular actively cooled beverage container holder, drink rail, table-top and counter-top can be implemented as a complete plug and play system to be installed as an upgrade to an existing facility, as well as in new facilities.

Costs can be separated out into "stadium railing and power" and "modular actively cooled beverage container holder plug and play" subcomponents. The stadium railing portion typically must comply with life safety regulations, is not a standard part, is installed into concrete that typically is off specifications (rise or fall greater than ¼ inch per foot over a specific stadium rail length), etc. Additionally, a stadium-wired junction box with a specialty input receptacle allows for plug and play from that point forward.

The modular actively cooled beverage container holder plug and play system simply affixes (bolts, screws or other fasteners) onto the stadium provided rail and plugs into the stadium wired junction box.

Each of the features discussed in this particular implementation section for the first system implementation apply equally to this method implementation. As indicated above, all the system features are not repeated here and should be considered repeated by reference.

## Claims

1. A modularized beverage holder (100) for actively cooling beverages, the modularized beverage holder comprising:
a sleeve shaped beverage container receiver (102) having a unibody construction comprising:
an insulating material;
an interior opening (106) adapted to receive beverage containers of varying sizes and materials;
a bottom portion (108) adapted to receive and provide support for beverage containers inserted into the interior opening of the sleeve shaped beverage container receiver; and
a sidewall (110) including an interior surface (112), an exterior surface (114) and one or more via holes (116),
a first modular engine (104) for actively cooling beverages, the first modular engine being mounted to the sleeve shaped beverage container receiver, and the first modular engine comprising:
a first thermal conductor member (120) having an inner beverage container facing surface (122) and an outer facing surface (124), the first thermal conductor member being disposed on the interior surface of the sidewall of the sleeve shaped beverage container receiver, at least part of the outer facing surface of the first thermal conductor member being disposed over a first via hole of the one or more via holes of the sidewall; and
a first active temperature control system including:
a first solid state cooling device (132) connectable to a power supply and having hot side (134) and a cold side (136), the cold side being coupled to the at least part of the outer facing surface of the first thermal conductor member through the first via hole and providing an active transfer of heat away from the first thermal conductor member;
a first thermal transfer device (140) coupled to the hot side of the first solid state cooling device and absorbing and dissipating heat from the hot side of the first solid state cooling device; and
a first thermal dispersion unit (142) coupled to the first thermal transfer device and actively dispersing heat absorbed by the first thermal transfer device;
**characterized by** comprising
a top frame (150) suspending the sleeve shaped beverage container receiver and the first modular engine, wherein the top frame (150) is suitable for mounting to a deck pan of a drink rail installation.

2. The modularized beverage holder (100) of claim 1, wherein the first modular engine is cantilevered from one or more support members attached to the top frame (150), such that the first modular engine is free floating, optionally wherein the one or more support members includes one or more springs.

3. The modularized beverage holder (100) of claim 1, further including a centering and drainage member (109) disposed at the bottom portion.

4. The modularized beverage holder (100) of claim 3, further including a bottom via hole in the bottom portion, wherein the centering and drainage member further includes a drain part that extends through the bottom via hole thereby enabling draining waste from the sleeve shaped beverage container receiver (102).

5. The modularized beverage holder (100) of claim 3, further including upwardly projecting centering bumps (2204) that center a standard size aluminum beverage container thereby enabling maintaining an air gap of predetermined size between an external surface of the standard size aluminum beverage container and the inner beverage container facing surface (122) of the first thermal conductor member.

6. The modularized beverage holder (100) of claim 1, wherein the sleeve shaped beverage container receiver (102) is expandable by operation of the sidewall (110) expanding, thereby enabling the first thermal conductor member (120) to expand when a beverage container having a diameter larger than the sleeve shaped beverage container receiver is inserted into the sleeve shaped beverage container receiver.

7. The modularized beverage holder (100) of claim 6, wherein, whenever the sidewall (110) expands, an exterior surface of the beverage container having the diameter larger than the sleeve shaped beverage container receiver (102) remains in contact with the interior surface (112) of the sidewall.

8. The modularized beverage holder (100) of claim 1, wherein the first thermal transfer device (140) includes at least a heat pipe (141) that absorbs and releases heat by means of phase transition.

9. The modularized beverage holder (100) of claim 1, wherein the first thermal dispersion unit (142) includes a radiator and a fan.

10. The modularized beverage holder (100) of claim 1, wherein the first thermal conductor member (120) has at least one of antibacterial properties and antibacterial agents, optionally wherein the first thermal conductor member is composed of at least some copper.

11. The modularized beverage holder (100) of claim 1, wherein the sleeve shaped beverage container receiver (102) has an accordion hinge structure (3602) what allows the sleeve shaped beverage container to be expandable to adapt to various sizes of beverage containers.

12. The modularized beverage holder (100) of claim 1, wherein the first solid state cooling device (132) includes a Peltier chip.

13. The modularized beverage holder (100) of claim 1, further comprising a second modular engine (702) for actively cooling beverages, the second modular engine being mounted to the sleeve shaped beverage container receiver (102), and the second modular engine comprising:
a second thermal conductor member (902) having an inner beverage facing surface (1202) and an outer facing surface (1204), the second thermal conductor member being disposed on the interior surface (112) of the sidewall (110) of the sleeve shaped beverage container receiver, at least part of the outer facing surface of the second thermal conductor member being disposed over a second via hole of the one or more via holes of the sidewall; and
a second active temperature control system including:
a second solid state cooling device (1206) connectable to a power supply and having hot side (1210) and a cold side (1208), the cold side being coupled to the at least part of the outer facing surface of the second thermal conductor member through the second via hole and providing an active transfer of heat away from the second thermal conductor member;
a second thermal transfer device (706) coupled to the hot side of the second solid state cooling device and absorbing and dissipating heat from the hot side of the second solid state cooling device; and
a second thermal dispersion unit (704) coupled to the second thermal transfer device and actively dispersing heat absorbed by the second thermal transfer device.

14. The modularized beverage holder (100) of claim 13, further comprising a third modular engine (1502) for actively cooling beverages, the third modular engine being mounted to the sleeve shaped beverage container receiver (102), and the third modular engine comprising:
a third thermal conductor member (2002) having an inner beverage facing surface and an outer facing surface, the third thermal conductor member being disposed on the interior surface (112) of the sidewall (110) of the sleeve shaped beverage container receiver, at least part of the outer facing surface of the third thermal conductor member being disposed over a third via hole (1704) of the one or more via holes of the sidewall; and
an third active temperature control system including:
a third solid state cooling device (1702) connectable to a power supply and having hot side and a cold side, the cold side being coupled to the at least part of the outer facing surface of the third thermal conductor member through the third via hole and providing an active transfer of heat away from the third thermal conductor member;
a third thermal transfer device (1506) coupled to the hot side of the third solid state cooling device and absorbing and dissipating heat from the hot side of the third solid state cooling device; and
a third thermal dispersion unit (1504) coupled to the third thermal transfer device and actively dispersing heat absorbed by the third thermal transfer device.

15. A method for actively cooling beverages, the method comprising:
placing a beverage container into a sleeve shaped beverage container receiver (102) having a unibody construction comprising:
a top frame (150) suspending the sleeve shaped beverage container receiver and a first modular engine (104), wherein the top frame (150) is suitable for mounting to a deck pan of a drink rail installation;
an insulating material;
an interior opening (106) adapted to receive beverage containers of varying sizes and materials;
a bottom portion (108) adapted to receive and provide support for beverage containers inserted into the interior opening of the sleeve shaped beverage container receiver; and
a sidewall (110) including an interior surface (112), an exterior surface (114) and one or more via holes (116); and
actively cooling the beverage container using the first modular engine, the first modular engine being mounted to the sleeve shaped beverage container receiver, and the first modular engine comprising:
a first thermal conductor member (120) having an inner beverage container facing surface (122) and an outer facing surface (124), the first thermal conductor member being disposed on the interior surface of the sidewall of the sleeve shaped beverage container receiver, at least part of the outer facing surface of the first thermal conductor member being disposed over a first via hole of the one or more via holes of the sidewall; and
a first active temperature control system including:
a first solid state cooling device (132) connectable to a power supply and having hot side (134) and a cold side (136), the cold side being coupled to the at least part of the outer facing surface of the first thermal conductor member through the first via hole and providing an active transfer of heat away from the first thermal conductor member;
a first thermal transfer device (140) coupled to the hot side of the first solid state cooling device and absorbing and dissipating heat from the hot side of the first solid state cooling device; and
a first thermal dispersion unit (142) coupled to the first thermal transfer device and actively dispersing heat absorbed by the first thermal transfer device.

## Patentansprüche

1. Modularisierter Getränkehalter (100) zum aktiven Kühlen von Getränken, wobei der modularisierte Getränkehalter umfasst:
eine hülsenförmige Getränkebehälteraufnahme (102) mit einer einteiligen Bauweise, umfassend:
ein Isoliermaterial;
eine Innenöffnung (106), die dazu ausgelegt ist, Getränkebehälter unterschiedlicher Größen und Materialien aufzunehmen;
einen unteren Abschnitt (108), der dazu ausgelegt ist, Getränkebehälter, die in die Innenöffnung der hülsenförmigen Getränkebehälteraufnahme eingesetzt werden, aufzunehmen und eine Stütze für diese bereitzustellen; und
eine Seitenwand (110), die eine Innenoberfläche (112), eine Außenoberfläche (114) und ein oder mehrere Durchgangslöcher (116) einschließt,
einen ersten modularen Motor (104) zum aktiven Kühlen von Getränken, wobei der erste modulare Motor an der hülsenförmigen Getränkebehälteraufnahme montiert ist und der erste modulare Motor umfasst:
ein erstes Wärmeleiterelement (120) mit einer inneren, dem Getränkebehälter zugewandten Oberfläche (122) und einer nach außen gewandten Oberfläche (124), wobei das erste Wärmeleiterelement auf der Innenoberfläche der Seitenwand der hülsenförmigen Getränkebehälteraufnahme angeordnet ist, wobei zumindest ein Teil der nach außen gewandten Oberfläche des ersten Wärmeleiterelements über einem ersten Durchgangsloch des einen oder der mehreren Durchgangslöcher der Seitenwand angeordnet ist; und
ein erstes aktives Temperatursteuersystem, das einschließt:
eine erste Festkörperkühlvorrichtung (132), die mit einer Stromversorgung verbindbar ist und heiße Seite (134) und eine kalte Seite (136) aufweist, wobei die kalte Seite mit dem zumindest einen Teil der nach außen gewandten Oberfläche des ersten Wärmeleiterelements durch das erste Durchgangsloch gekoppelt ist und eine aktive Übertragung von Wärme weg von dem ersten Wärmeleiterelement bereitstellt;
eine erste Wärmeübertragungsvorrichtung (140), die mit der heißen Seite der ersten Festkörperkühlvorrichtung gekoppelt ist und Wärme von der heißen Seite der ersten Festkörperkühlvorrichtung absorbiert und ableitet; und
eine erste Wärmeverteilungseinheit (142), die mit der ersten Wärmeübertragungsvorrichtung gekoppelt ist und von der ersten Wärmeübertragungsvorrichtung absorbierte Wärme aktiv verteilt;
**dadurch gekennzeichnet, dass** es umfasst:
einen oberen Rahmen (150), der die hülsenförmige Getränkebehälteraufnahme und den ersten modularen Motor aufhängt, wobei der obere Rahmen (150) zur Montage an einer Deckschale einer Getränkeschieneninstallation geeignet ist.

2. Modularisierter Getränkehalter (100) nach Anspruch 1, wobei der erste modulare Motor von einem oder mehreren Stützelementen auskragt, die an dem oberen Rahmen (150) angebracht sind, sodass der erste modulare Motor frei schwebend ist, wobei wahlweise das eine oder die mehreren Stützelemente eine oder mehrere Federn einschließen.

3. Modularisierter Getränkehalter (100) nach Anspruch 1, ferner einschließend ein Zentrier-und Abflusselement (109), das an dem unteren Abschnitt angeordnet ist.

4. Modularisierter Getränkehalter (100) nach Anspruch 3, ferner einschließend ein unteres Durchgangsloch in dem unteren Abschnitt, wobei das Zentrier-und Abflusselement ferner ein Abflussteil einschließt, das sich durch das untere Durchgangsloch erstreckt, wodurch ein Abfließen von Abfall aus der hülsenförmigen Getränkebehälteraufnahme (102) ermöglicht wird.

5. Modularisierter Getränkehalter (100) nach Anspruch 3, ferner einschließend nach oben vorstehende Zentrierhöcker (2204), die einen Aluminiumgetränkebehälter mit Standardgröße zentrieren, wodurch ermöglicht wird, einen Luftspalt mit vorbestimmter Größe zwischen einer Außenoberfläche des Aluminiumgetränkebehälters mit Standardgröße und der inneren, dem Getränkebehälter zugewandten Oberfläche (122) des ersten Wärmeleiterelements aufrechtzuerhalten.

6. Modularisierter Getränkehalter (100) nach Anspruch 1, wobei die hülsenförmige Getränkebehälteraufnahme (102) durch Betätigen der Erweiterung der Seitenwand (110) erweiterbar ist, wodurch ermöglicht wird, dass sich das erste Wärmeleiterelement (120) erweitert, wenn ein Getränkebehälter mit einem Durchmesser, der größer als die hülsenförmige Getränkebehälteraufnahme ist, in die hülsenförmige Getränkebehälteraufnahme eingesetzt wird.

7. Modularisierter Getränkehalter (100) nach Anspruch 6, wobei immer dann, wenn sich die Seitenwand (110) erweitert, eine Außenoberfläche des Getränkebehälters, der einen größeren Durchmesser als die hülsenförmige Getränkebehälteraufnahme (102) aufweist, in Kontakt mit der Innenoberfläche (112) der Seitenwand bleibt.

8. Modularisierter Getränkehalter (100) nach Anspruch 1, wobei die erste Wärmeübertragungsvorrichtung (140) mindestens ein Wärmerohr (141) einschließt, das Wärme mittels Phasenübergang absorbiert und abgibt.

9. Modularisierter Getränkehalter (100) nach Anspruch 1, wobei die erste Wärmeverteilungseinheit (142) einen Kühler und ein Gebläse einschließt.

10. Modularisierter Getränkehalter (100) nach Anspruch 1, wobei das erste Wärmeleiterelement (120) mindestens eines von antibakteriellen Eigenschaften und antibakteriellen Mitteln aufweist, wobei das erste Wärmeleiterelement wahlweise aus zumindest etwas Kupfer besteht.

11. Modularisierter Getränkehalter (100) nach Anspruch 1, wobei die hülsenförmige Getränkebehälteraufnahme (102) eine Ziehharmonikascharnierstruktur (3602) aufweist, die es ermöglicht, dass der hülsenförmige Getränkebehälter erweiterbar ist, um sich an verschiedene Größen von Getränkebehältern anzupassen.

12. Modularisierter Getränkehalter (100) nach Anspruch 1, wobei die erste Festkörperkühlvorrichtung (132) einen Peltier-Chip einschließt.

13. Modularisierter Getränkehalter (100) nach Anspruch 1, ferner umfassend einen zweiten modularen Motor (702) zum aktiven Kühlen von Getränken, wobei der zweite modulare Motor an der hülsenförmigen Getränkebehälteraufnahme (102) montiert ist und der zweite modulare Motor umfasst:
ein zweites Wärmeleiterelement (902) mit einer inneren, dem Getränk zugewandten Oberfläche (1202) und einer nach außen gewandten Oberfläche (1204), wobei das zweite Wärmeleiterelement auf der Innenoberfläche (112) der Seitenwand (110) der hülsenförmigen Getränkebehälteraufnahme angeordnet ist, wobei zumindest ein Teil der nach außen gewandten Oberfläche des zweiten Wärmeleiterelements über einem zweiten Durchgangsloch des einen oder der mehreren Durchgangslöcher der Seitenwand angeordnet ist; und
ein zweites aktives Temperatursteuersystem, das einschließt:
eine zweite Festkörperkühlvorrichtung (1206), die mit einer Stromversorgung verbindbar ist und heiße Seite (1210) und eine kalte Seite (1208) aufweist, wobei die kalte Seite mit dem zumindest einen Teil der nach außen gewandten Oberfläche des zweiten Wärmeleiterelements durch das zweite Durchgangsloch gekoppelt ist und eine aktive Übertragung von Wärme weg von dem zweiten Wärmeleiterelement bereitstellt;
eine zweite Wärmeübertragungsvorrichtung (706), die mit der heißen Seite der zweiten Festkörperkühlvorrichtung gekoppelt ist und Wärme von der heißen Seite der zweiten Festkörperkühlvorrichtung absorbiert und ableitet; und
eine zweite Wärmeverteilungseinheit (704), die mit der zweiten Wärmeübertragungsvorrichtung gekoppelt ist und von der zweiten Wärmeübertragungsvorrichtung absorbierte Wärme aktiv verteilt.

14. Modularisierter Getränkehalter (100) nach Anspruch 13, ferner umfassend einen dritten modularen Motor (1502) zum aktiven Kühlen von Getränken, wobei der dritte modulare Motor an der hülsenförmigen Getränkebehälteraufnahme (102) montiert ist und der dritte modulare Motor umfasst:
ein drittes Wärmeleiterelement (2002) mit einer inneren, dem Getränk zugewandten Oberfläche und einer nach außen gewandten Oberfläche, wobei das dritte Wärmeleiterelement auf der Innenoberfläche (112) der Seitenwand (110) der hülsenförmigen Getränkebehälteraufnahme angeordnet ist, wobei zumindest ein Teil der nach außen gewandten Oberfläche des dritten Wärmeleiterelements über einem dritten Durchgangsloch (1704) des einen oder der mehreren Durchgangslöcher der Seitenwand angeordnet ist; und
ein drittes aktives Temperatursteuersystem, das einschließt:
eine dritte Festkörperkühlvorrichtung (1702), die mit einer Stromversorgung verbindbar ist und heiße Seite und eine kalte Seite aufweist, wobei die kalte Seite mit dem zumindest einen Teil der nach außen gewandten Oberfläche des dritten Wärmeleiterelements durch das dritte Durchgangsloch gekoppelt ist und eine aktive Übertragung von Wärme weg von dem dritten Wärmeleiterelement bereitstellt;
eine dritte Wärmeübertragungsvorrichtung (1506), die mit der heißen Seite der dritten Festkörperkühlvorrichtung gekoppelt ist und Wärme von der heißen Seite der dritten Festkörperkühlvorrichtung absorbiert und ableitet; und
eine dritte Wärmeverteilungseinheit (1504), die mit der dritten Wärmeübertragungsvorrichtung gekoppelt ist und von der dritten Wärmeübertragungsvorrichtung absorbierte Wärme aktiv verteilt.

15. Verfahren zum aktiven Kühlen von Getränken, wobei das Verfahren umfasst:
Platzieren eines Getränkebehälters in einer hülsenförmigen Getränkebehälteraufnahme (102) mit einer einteiligen Bauweise, umfassend:
einen oberen Rahmen (150), der die hülsenförmige Getränkebehälteraufnahme aufhängt, und einen ersten modularen Motor (104), wobei der obere Rahmen (150) zur Montage an einer Deckschale einer Getränkeschieneninstallation geeignet ist;
ein Isoliermaterial;
eine Innenöffnung (106), die dazu ausgelegt ist, Getränkebehälter unterschiedlicher Größen und Materialien aufzunehmen;
einen unteren Abschnitt (108), der dazu ausgelegt ist, Getränkebehälter, die in die Innenöffnung der hülsenförmigen Getränkebehälteraufnahme eingesetzt werden, aufzunehmen und eine Stütze für diese bereitzustellen; und
eine Seitenwand (110), die eine Innenoberfläche (112), eine Außenoberfläche (114) und ein oder mehrere Durchgangslöcher (116) einschließt; und
aktives Kühlen des Getränkebehälters unter Verwendung des ersten modularen Motors, wobei der erste modulare Motor an der hülsenförmigen Getränkebehälteraufnahme montiert ist und der erste modulare Motor umfasst:
ein erstes Wärmeleiterelement (120) mit einer inneren, dem Getränkebehälter zugewandten Oberfläche (122) und einer nach außen gewandten Oberfläche (124), wobei das erste Wärmeleiterelement auf der Innenoberfläche der Seitenwand der hülsenförmigen Getränkebehälteraufnahme angeordnet ist, wobei zumindest ein Teil der nach außen gewandten Oberfläche des ersten Wärmeleiterelements über einem ersten Durchgangsloch des einen oder der mehreren Durchgangslöcher der Seitenwand angeordnet ist; und
ein erstes aktives Temperatursteuersystem, das einschließt:
eine erste Festkörperkühlvorrichtung (132), die mit einer Stromversorgung verbindbar ist und heiße Seite (134) und eine kalte Seite (136) aufweist, wobei die kalte Seite mit dem zumindest einen Teil der nach außen gewandten Oberfläche des ersten Wärmeleiterelements durch das erste Durchgangsloch gekoppelt ist und eine aktive Übertragung von Wärme weg von dem ersten Wärmeleiterelement bereitstellt;
eine erste Wärmeübertragungsvorrichtung (140), die mit der heißen Seite der ersten Festkörperkühlvorrichtung gekoppelt ist und Wärme von der heißen Seite der ersten Festkörperkühlvorrichtung absorbiert und ableitet; und
eine erste Wärmeverteilungseinheit (142), die mit der ersten Wärmeübertragungsvorrichtung gekoppelt ist und von der ersten Wärmeübertragungsvorrichtung absorbierte Wärme aktiv verteilt.

## Revendications

1. Porte-boisson modularisé (100) pour refroidir activement des boissons, le porte-boisson modularisé comprenant :
un récepteur de récipient à boisson en forme de manchon (102) ayant une construction monobloc comprenant :
un matériau isolant ;
une ouverture intérieure (106) conçue pour recevoir des récipients à boisson de tailles et matériaux variables ;
une partie inférieure (108) conçue pour recevoir et fournir un support pour des récipients à boisson insérés dans l'ouverture intérieure du récepteur de récipient à boisson en forme de manchon ; et
une paroi latérale (110) incluant une surface intérieure (112), une surface extérieure (114) et un ou plusieurs trous de raccordement (116),
un premier moteur modulaire (104) pour refroidir activement des boissons, le premier moteur modulaire étant monté au récepteur de récipient à boisson en forme de manchon, et le premier moteur modulaire comprenant :
un premier élément thermoconducteur (120) ayant une surface interne tournée vers le récipient à boisson (122) et une surface tournée vers l'extérieur (124), le premier élément thermoconducteur étant disposé sur la surface intérieure de la paroi latérale du récepteur de récipient à boisson en forme de manchon, au moins une partie de la surface tournée vers l'extérieur du premier élément thermoconducteur étant disposée par-dessus un premier trou de raccordement parmi le ou les trous de raccordement de la paroi latérale ; et
un premier système de régulation active de température incluant :
un premier dispositif de refroidissement à semi-conducteurs (132) pouvant être connecté à une alimentation électrique et ayant côté chaud (134) et un côté froid (136), le côté froid étant couplé à l'au moins une partie de la surface tournée vers l'extérieur du premier élément thermoconducteur par l'intermédiaire du premier trou de raccordement et fournissant un transfert actif de chaleur à l'écart du premier élément thermoconducteur ;
un premier dispositif de transfert thermique (140) couplé au côté chaud du premier dispositif de refroidissement à semi-conducteurs et absorbant et dissipant la chaleur depuis le côté chaud du premier dispositif de refroidissement à semi-conducteurs ; et
une première unité de dispersion thermique (142) couplée au premier dispositif de transfert thermique et dispersant activement la chaleur absorbée par le premier dispositif de transfert thermique ;
**caractérisé en ce qu'il** comprend
un cadre supérieur (150) suspendant le récepteur de récipient à boisson en forme de manchon et le premier moteur modulaire, dans lequel le cadre supérieur (150) convient pour un montage à un plateau de plate-forme d'une installation de rail à boissons.

2. Porte-boisson modularisé (100) selon la revendication 1, dans lequel le premier moteur modulaire est en porte-à-faux à partir d'un ou plusieurs éléments de support fixés au cadre supérieur (150), de telle sorte que le premier moteur modulaire flotte librement, éventuellement dans lequel le ou les éléments de support incluent un ou plusieurs ressorts.

3. Porte-boisson modularisé (100) selon la revendication 1, incluant en outre un élément de centrage et d'évacuation (109) disposé au niveau de la partie inférieure.

4. Porte-boisson modularisé (100) selon la revendication 3, incluant en outre un trou de raccordement inférieur dans la partie inférieure, dans lequel l'élément de centrage et d'évacuation inclut en outre une partie d'évacuation qui s'étend à travers le trou de raccordement inférieur ce qui permet d'évacuer des déchets du récepteur de récipient à boisson en forme de manchon (102).

5. Porte-boisson modularisé (100) selon la revendication 3, incluant en outre des bosses de centrage faisant saillie vers le haut (2204) qui centrent un récipient à boisson en aluminium de taille standard ce qui permet de maintenir un espace d'air de taille prédéterminée entre une surface externe du récipient à boisson en aluminium de taille standard et la surface interne tournée vers le récipient à boisson (122) du premier élément thermoconducteur.

6. Porte-boisson modularisé (100) selon la revendication 1, dans lequel le récepteur de récipient à boisson en forme de manchon (102) est expansible par une opération d'expansion de la paroi latérale (110), ce qui permet au premier élément thermoconducteur (120) de s'expanser lorsqu'un récipient à boisson ayant un diamètre plus grand que le récepteur de récipient à boisson en forme de manchon est inséré dans le récepteur de récipient à boisson en forme de manchon.

7. Porte-boisson modularisé (100) selon la revendication 6, dans lequel, chaque fois que la paroi latérale (110) s'expanse, une surface extérieure du récipient à boisson ayant le diamètre plus grand que le récepteur de récipient à boisson en forme de manchon (102) demeure en contact avec la surface intérieure (112) de la paroi latérale.

8. Porte-boisson modularisé (100) selon la revendication 1, dans lequel le premier dispositif de transfert thermique (140) inclut au moins un caloduc (141) qui absorbe et libère de la chaleur au moyen d'une transition de phase.

9. Porte-boisson modularisé (100) selon la revendication 1, dans lequel la première unité de dispersion thermique (142) inclut un radiateur et un ventilateur.

10. Porte-boisson modularisé (100) selon la revendication 1, dans lequel le premier élément thermoconducteur (120) a au moins l'un parmi des propriétés antibactériennes et des agents antibactériens, éventuellement dans lequel le premier élément thermoconducteur est composé d'au moins un peu de cuivre.

11. Porte-boisson modularisé (100) selon la revendication 1, dans lequel le récepteur de récipient à boisson en forme de manchon (102) a une structure de charnière en accordéon (3602) ce qui permet au récipient à boisson en forme de gaine d'être expansible pour s'adapter à diverses tailles de récipients à boisson.

12. Porte-boisson modularisé (100) selon la revendication 1, dans lequel le premier dispositif de refroidissement à semi-conducteurs (132) inclut une puce de Peltier.

13. Porte-boisson modularisé (100) selon la revendication 1, comprenant en outre un deuxième moteur modulaire (702) pour refroidir activement des boissons, le deuxième moteur modulaire étant monté au récepteur de récipient à boisson en forme de manchon (102), et le deuxième moteur modulaire comprenant :
un deuxième élément thermoconducteur (902) ayant une surface interne tournée vers la boisson (1202) et une surface tournée vers l'extérieur (1204), le deuxième élément thermoconducteur étant disposé sur la surface intérieure (112) de la paroi latérale (110) du récepteur de récipient à boisson en forme de manchon, au moins une partie de la surface tournée vers l'extérieur du deuxième élément thermoconducteur étant disposée par-dessus un deuxième trou de raccordement parmi le ou les trous de raccordement de la paroi latérale ; et
un deuxième système de régulation active de température incluant :
un deuxième dispositif de refroidissement à semi-conducteurs (1206) pouvant être connecté à une alimentation électrique et ayant côté chaud (1210) et un côté froid (1208), le côté froid étant couplé à l'au moins une partie de la surface tournée vers l'extérieur du deuxième élément thermoconducteur par l'intermédiaire du deuxième trou de raccordement et fournissant un transfert actif de chaleur à l'écart du deuxième élément thermoconducteur ;
un deuxième dispositif de transfert thermique (706) couplé au côté chaud du deuxième dispositif de refroidissement à semi-conducteurs et absorbant et dissipant la chaleur depuis le côté chaud du deuxième dispositif de refroidissement à semi-conducteurs ; et
une deuxième unité de dispersion thermique (704) couplée au deuxième dispositif de transfert thermique et dispersant activement la chaleur absorbée par le deuxième dispositif de transfert thermique.

14. Porte-boisson modularisé (100) selon la revendication 13, comprenant en outre un troisième moteur modulaire (1502) pour refroidir activement des boissons, le troisième moteur modulaire étant monté au récepteur de récipient à boisson en forme de manchon (102), et le troisième moteur modulaire comprenant :
un troisième élément thermoconducteur (2002) ayant une surface interne tournée vers la boisson et une surface tournée vers l'extérieur, le troisième élément thermoconducteur étant disposé sur la surface intérieure (112) de la paroi latérale (110) du récepteur de récipient à boisson en forme de manchon, au moins une partie de la surface tournée vers l'extérieur du troisième élément thermoconducteur étant disposée par-dessus un troisième trou de raccordement (1704) parmi le ou les trous de raccordement de la paroi latérale ; et
un troisième système de régulation active de température incluant :
un troisième dispositif de refroidissement à semi-conducteurs (1702) pouvant être connecté à une alimentation électrique et ayant côté chaud et un côté froid, le côté froid étant couplé à l'au moins une partie de la surface tournée vers l'extérieur du troisième élément thermoconducteur par l'intermédiaire du troisième trou de raccordement et fournissant un transfert actif de chaleur à l'écart du troisième élément thermoconducteur ;
un troisième dispositif de transfert thermique (1506) couplé au côté chaud du troisième dispositif de refroidissement à semi-conducteurs et absorbant et dissipant la chaleur depuis le côté chaud du troisième dispositif de refroidissement à semi-conducteurs ; et
une troisième unité de dispersion thermique (1504) couplée au troisième dispositif de transfert thermique et dispersant activement la chaleur absorbée par le troisième dispositif de transfert thermique.

15. Procédé pour refroidir activement des boissons, le procédé comprenant :
la mise en place d'un récipient à boisson dans un récepteur de récipient à boisson en forme de manchon (102) ayant une construction monobloc comprenant :
un cadre supérieur (150) suspendant le récepteur de récipient à boisson en forme de manchon et un premier moteur modulaire (104), dans lequel le cadre supérieur (150) convient pour un montage à un plateau de plate-forme d'une installation de rail à boissons ;
un matériau isolant ;
une ouverture intérieure (106) conçue pour recevoir des récipients à boisson de tailles et matériaux variables ;
une partie inférieure (108) conçue pour recevoir et fournir un support pour des récipients à boisson insérés dans l'ouverture intérieure du récepteur de récipient à boisson en forme de manchon ; et
une paroi latérale (110) incluant une surface intérieure (112), une surface extérieure (114) et un ou plusieurs trous de raccordement (116) ; et
le refroidissement actif du récipient à boisson en utilisant le premier moteur modulaire, le premier moteur modulaire étant monté au récepteur de récipient à boisson en forme de manchon, et le premier moteur modulaire comprenant :
un premier élément thermoconducteur (120) ayant une surface interne tournée vers le récipient à boisson (122) et une surface tournée vers l'extérieur (124), le premier élément thermoconducteur étant disposé sur la surface intérieure de la paroi latérale du récepteur de récipient à boisson en forme de manchon, au moins une partie de la surface tournée vers l'extérieur du premier élément thermoconducteur étant disposée par-dessus un premier trou de raccordement parmi le ou les trous de raccordement de la paroi latérale ; et
un premier système de régulation active de température incluant :
un premier dispositif de refroidissement à semi-conducteurs (132) pouvant être connecté à une alimentation électrique et ayant côté chaud (134) et un côté froid (136), le côté froid étant couplé à l'au moins une partie de la surface tournée vers l'extérieur du premier élément thermoconducteur par l'intermédiaire du premier trou de raccordement et fournissant un transfert actif de chaleur à l'écart du premier élément thermoconducteur ;
un premier dispositif de transfert thermique (140) couplé au côté chaud du premier dispositif de refroidissement à semi-conducteurs et absorbant et dissipant la chaleur depuis le côté chaud du premier dispositif de refroidissement à semi-conducteurs ; et
une première unité de dispersion thermique (142) couplée au premier dispositif de transfert thermique et dispersant activement la chaleur absorbée par le premier dispositif de transfert thermique.
